# EUROPEAN PATENT SPECIFICATION

(11) **EP 0 622 419 B1**
(45) Date of publication and mention of the grant of the patent: **10.02.1999**
(21) Application number: 94106688.8
(22) Date of filing: 28.04.1994
(51) Int. Cl.: C08L 77/00, C08L 51/06, C08L 45/00, C08L 23/16

(54) **Cycloolefin resin composition**
Cycloolefin-Harzzusammensetzung
Composition de résine cyclo-oléfinique

(30) Priority: 28.04.1993 JP 102527/93
(43) Date of publication of application: 02.11.1994
(73) Proprietor: MITSUI CHEMICALS, INC., Tokyo (JP)
(72) Inventor: Aso, Hirotaka, c/o Mitsui Petrochemical Ind., Ltd., Kuga-gun, Yamaguchi 740 (JP); Kawamoto, Keiji, c/o Mitsui Petrochemical Ind. Ltd, Kuga-gun, Yamaguchi 740 (JP)
(74) Representative: Hansen, Bernd, Dr. Dipl.-Chem.

(56) References cited:
- EP-A- 0 458 365
- EP-A- 0 532 337

## Description

### FIELD OF THE INVENTION

This invention relates to a resin composition containing a graft modified cycloolefin resin, an elastomer and polyamide, having excellent impact resistance and adhesion of coating, and being low in water absorption.

### BACKGROUND OF THE INVENTION

Conventionally, polyolefins, such as polyethylene or polypropylene, are known as resins excellent in chemical resistance and solvent resistance. However, when polyolefin is low in crystallinity index, it cannot be said that the polyolefin has sufficient rigidity, heat resistance and solvent resistance.

On that account, there is adopted a process for improving polyolefin in heat resistance and rigidity by the addition thereto of a nucleating agent or a process for enhancing polyolefin in crystallinity index by cooling a molten polyolefin gradually. However, it is hard to say that the effect obtained thereby is sufficient.

Apart from such polyolefins as referred to above, it is reported that copolymers obtained by the reaction of ethylene with bulky monomers are excellent in properties such as heat resistance in comparison with conventionally known polyolefins (see, for example, U.S. Patent 2,883,372 and Japanese Patent Publication No. 14910/1971).

In this connection, on the basis of the acquired information on the fact that cyclic random copolymers obtained by copolymerization of specific cycloolefins as bulky monomers and ethylene are excellent in heat resistance, heat aging characteristics, dielectric characteristics and rigidity, the present applicant has already proposed random copolymers obtained by using specific cycloolefins (see Japanese Patent L-O-P Publications Nos. 168708/1985, 120816/1986, 115912/1986, 115916/1986, 271308/1986, 272216/1986, 252406/1987 and 252407/1987) and mixtures thereof with polyamide, see EP-A-0 458 365 and EP-A-0 532 337.

On the other hand, an attempt has been made to incorporate other resins into polyamides for the purpose of improving characteristics inherent in polyamides. In spite of various improvements suggested as above, there was much room for further improvement on various characteristics such as water absorption properties, molding shrinkage, heat-resisting rigidity or adhesion of coating.

### OBJECT OF THE INVENTION

The present invention intends to provide, as its object, a cycloolefin resin composition containing the graft-modified of the above-mentioned cycloolefin resin and polyamide, which is capable of forming molded articles excellent particularly in impact strength, low water absorption properties and adhesion of coating.

### SUMMARY OF THE INVENTION

The present invention provides a cycloolefin resin composition consisting of:
(a) a graft modified cycloolefin resin obtainable by modifying at least one of the following resins
   (a-1) a random copolymer of ethylene and a cycloolefin represented by the following formula (I),
   (a-2) a ring opening homopolymer or copolymer of a cycloolefin represented by the following formula (I), and
   (a-3) a hydrogenated product of the above-mentioned ring opening homopolymer or copolymer, with a graft monomer;
(b) an α-olefin copolymer elastomer which is not modified with any graft monomers, and having a tensile modulus at 23°C of 0.1 to 2000 kg/cm², a glass transition temperature of 0°C or less, and crystallinity index of 30% or less, and
(c) is a graft modified α-olefin copolymer other than the component (a) obtainable by graft modifying an α-olefin copolymer having a tensile modulus at 23°C of 0.1 to 2000 kg/cm², a glass transition temperature of 0°C or less, and crystallinity index of 30% or less, with a graft monomer;
(d) a polyamide; and
(e) optionally, at least one additive selected from the group consisting of inorganic fillers, organic fillers, heat stabilizers, weathering agents, antistatic agents, antislip agents, anti-blocking agents, anti-fogging agents, lubricants, pigments, dyes, natural oil, synthetic oil and wax;
wherein based on 100 parts by weight of the sum total content of the components (a), (b), (c) and (d), the amount of the component (a) is from 0.5 to 38 parts by weight, the total sum content of the components (b) and (c) is 0.5 to 38 parts by weight, and the amount of the component (d) is from more than 60 parts by weight to less than 99 parts by weight; 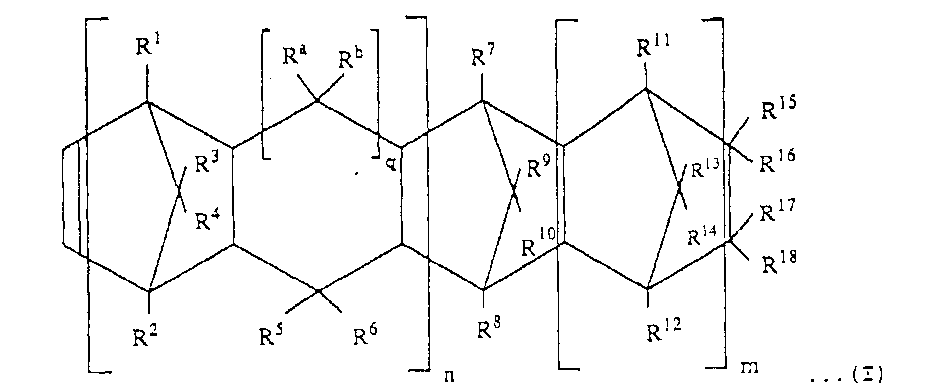 wherein
n is 0 or 1,
m is 0 or a positive integer,
q is 0 or 1,
R¹ to R¹⁸, R^{a} and R^{b}, independently, represent an atom or a group selected from a hydrogen atom, a halogen atom and a hydrocarbon group, or R¹⁵ to R¹⁸ are bonded together to form a monocyclic group or a polycyclic group which can have double bond(s), or R¹⁵ and R¹⁶ or R¹⁷ and R¹⁸ form an alkylidene group.

The cycloolefin resin composition according to the present invention is excellent in impact strength, low water absorption properties and adhesion of coating.

### DETAILED DESCRIPTION OF THE INVENTION

Hereinafter, the cycloolefin resin composition according to the present invention is explained in detail.

The cycloolefin resin composition according to the present invention contains (a) a graft modified cycloolefin resin, (b) a specific elastomer, (c) a graft modified product of the specific elastomer, and (d) a polyamide.

The graft modified cycloolefin resin used in the present invention is a graft modified product obtained by modifying any of
(a-1) a cycloolefin random copolymer comprising ethylene component units and component units derived from the cycloolefin represented by the following formula [I],
(a-2) a ring opening homopolymer or copolymer of cycloolefin represented by the following formula [I] (ring opening polymer of cycloolefin), and
(a-3) a hydrogenated product thereof (hydrogenated ring opening polymer),
with a graft monomer.

These graft modified cycloolefin resins as illustrated above may be used either singly or in combination. Further, this graft modified cycloolefin resin may be a mixture of a high-graft modified cycloolefin resin and an unmodified cycloolefin resin.

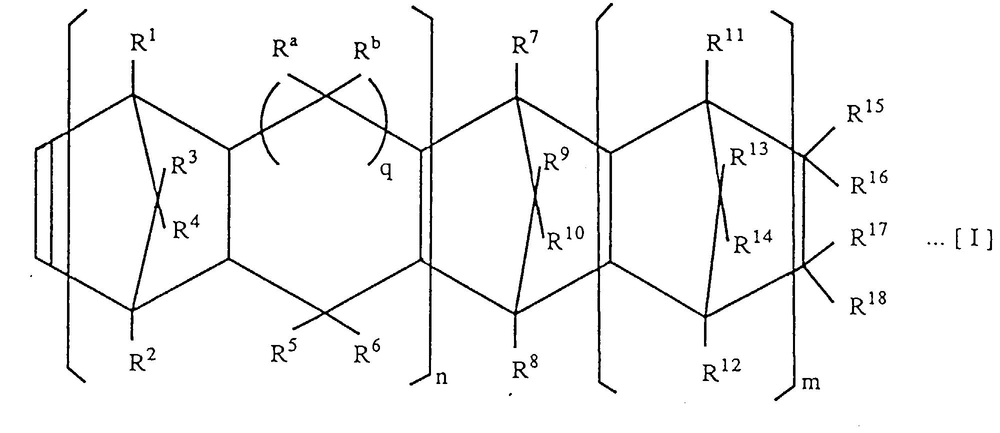

In the above-mentioned formula [I], n is 0 (zero) or 1, m is 0 (zero) or a positive integer, and q is 0 or 1.

R¹-R¹⁸, R^{a} and R^{b} individually represent an atom or a group selected from the group consisting of hydrogen atom, halogen atom and hydrocarbon group, wherein the halogen atom includes, for example, fluorine atom, chlorine atom, bromine atom and iodine atom, and the hydrocarbon group includes usually alkyl of 1-20 carbon atoms and cycloalkyl of 3-15 carbon atoms. Concrete examples of the alkyl include methyl, ethyl, propyl, isopropyl, amyl, hexyl, octyl, decyl and dodecyl and those of the cycloalkyl include cyclohexyl.

In the above formula [I], when "q" is 0 (zero), the ring represented by using "q" forms a five-membered ring.

In the above mentioned formula [I], R¹⁵ and R¹⁶; R¹⁷ and R¹⁸; R¹⁵ and R¹⁷; R¹⁶ and R¹⁸; R¹⁵ and R¹⁸; or R¹⁶ and R¹⁷ may form, linking together (in combination), a mono- or polycyclic ring. Further, these rings may have a double bond.

Moreover, R¹⁵ together with R¹⁶, or R¹⁷ together with R¹⁸ may form an alkylidene of 2-20 carbon atoms, and concrete examples thereof include ethylidene, propylidene and isopropylidene.

The graft modified cycloolefin resin used in the present invention is prepared by modifying the above-mentioned cycloolefin random copolymer (a-1), ring opening polymer of cycloolefin (a-2), or hydrogenated ring opening polymer (a-3) with a graft monomer. The cycloolefin resin can be produced by the following procedure. The cycloolefins represented by the above-mentioned formula [I] which are used in the preparation of the cycloolefin resin may be prepared by condensing cyclopentadienes with corresponding olefins or cycloolefins through Diels-Alder reaction.

The cycloolefins represented by the above-mentioned formula [I] used in the present invention include concretely:
bicyclo[2.2.1]hept-2-ene derivative,
tetracyclo[4.4.0.1^{2,5}.1^{7,10}]-3-dodecene derivative,
hexacyclo[6.6.1.1^{3,6}.1^{10,13}.0^{2,7}.0^{9,14}]-4-heptadecene derivative,
octacyclo[8.8.0.1^{2,9}.1^{4,7}.1^{11,18}.1^{13,16}.0^{3,8}.0^{12,17}]-5-docosene derivative,
pentacyclo[6.6.1.1^{3,6}.0^{2,7}.0^{9,14}]-4-hexadecene derivative,
heptacyclo-5-eicosene derivative,
heptacyclo-5-heneicosene derivative,
tricyclo[4.3.0.1^{2,5}]-3-decene derivative,
tricyclo[4.3.0.1^{2,5}]-3-undecene derivative,
pentacyclo[6.5.1.1^{3,6}.0^{2,7}.0^{9,13}]-4-pentadecene derivative,
pentacyclopentadecadiene derivative,
pentacyclo[7.4.0.1^{2,5}.0^{8,13}.1^{9,12}]-3-pentadecene derivative,
heptacyclo[8.7.0.1^{3,6}.0^{2,7}.1^{10,17}.0^{11,16}.1^{12,15}]-4-eicosene derivative, and
nonacyclo[10.9.1.1^{4,7}.0^{3,8}.0^{2,10}.0^{12,21}.1^{13,20}.0^{14,19}. 1^{15,18}]-5-pentacosene derivative,
pentacyclo[8.4.0.1^{2,5}.1.^{9,12}.0^{8,13}]-3-hexadecene derivative,
heptacyclo[8.8.0.1^{4,7}.1^{11,18}.1^{13,16}.0^{3,8}.0^{12,17}]-5-heneicosene derivative,
nonacyclo[10.10.1.1^{5,8}.1^{14,21}.1^{16,19}.0^{2,11}.0^{4,9}.0^{13,22}. 0^{15,20}]-5-hexacosene derivative,
Concrete examples of the above-mentioned compounds are shown below.

Bicyclo[2.2.1]hept-2-ene derivative including such as those mentioned below.

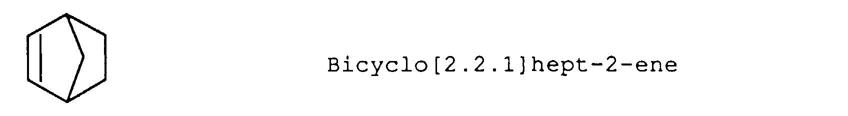

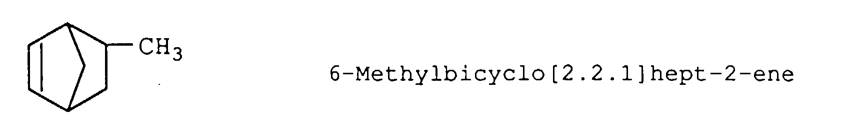

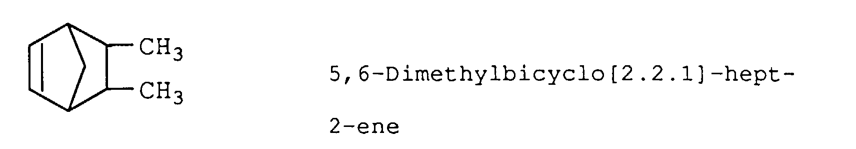

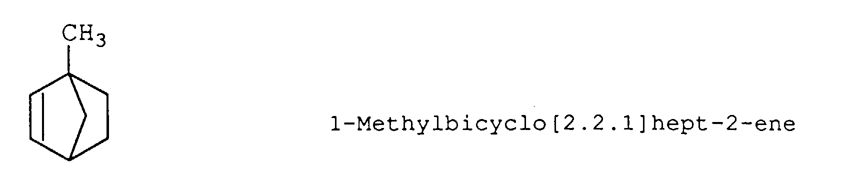

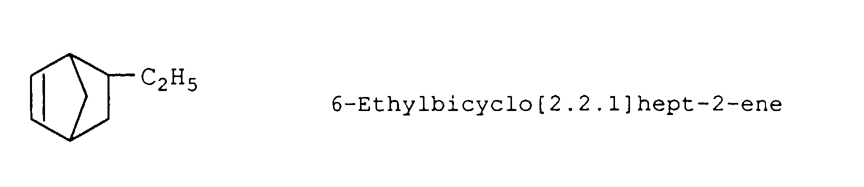

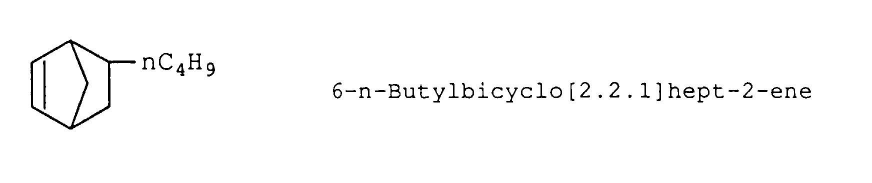

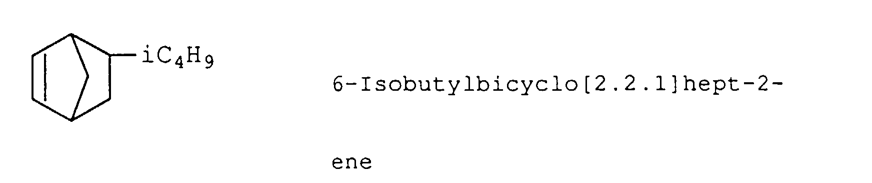

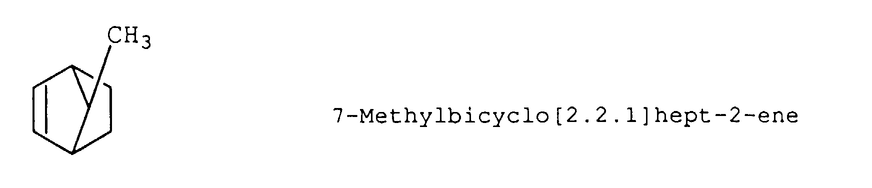

Tetracyclo[4.4.0.1^{2,5}.1^{7,10}]-3-dodecene -3-dodecene derivatives such as those mentioned below.

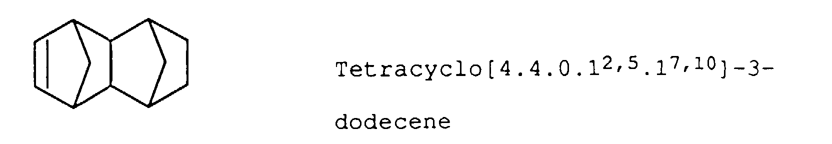

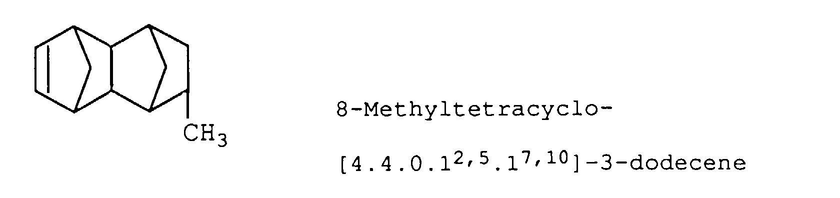

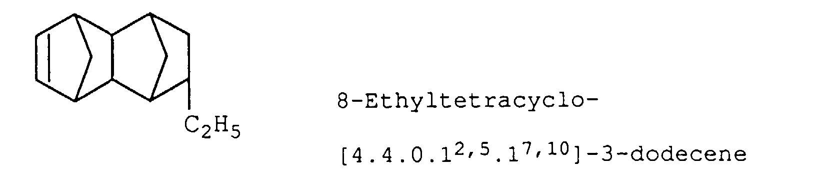

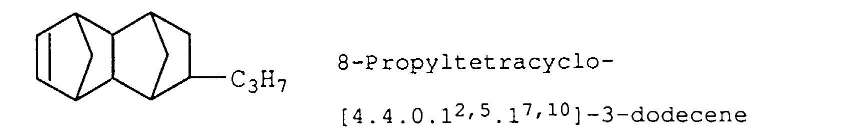

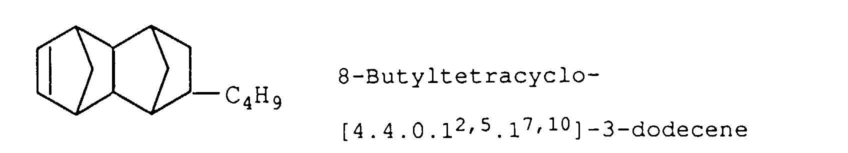

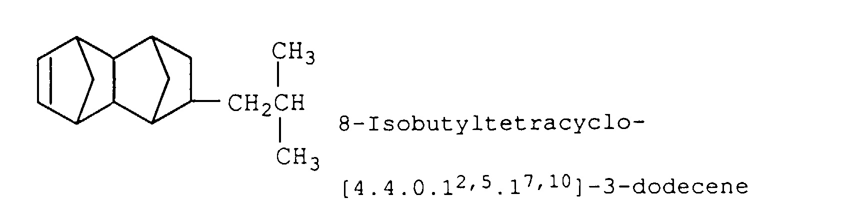

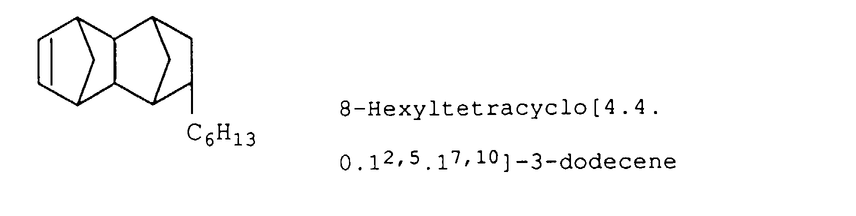

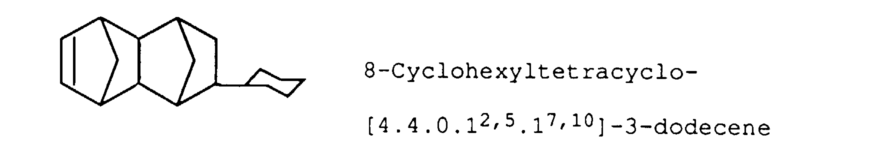

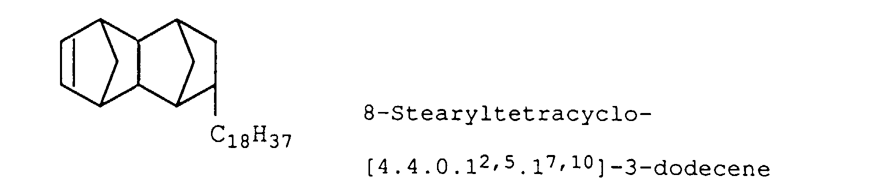

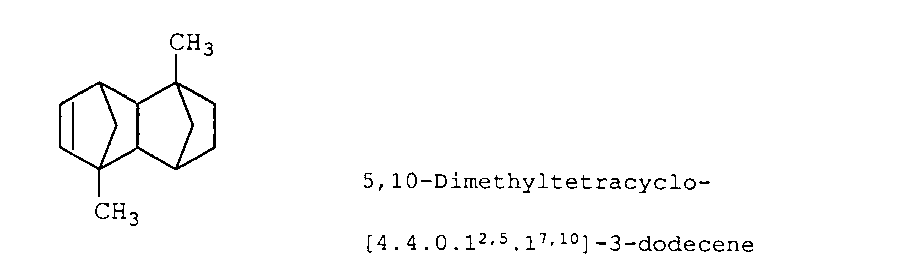

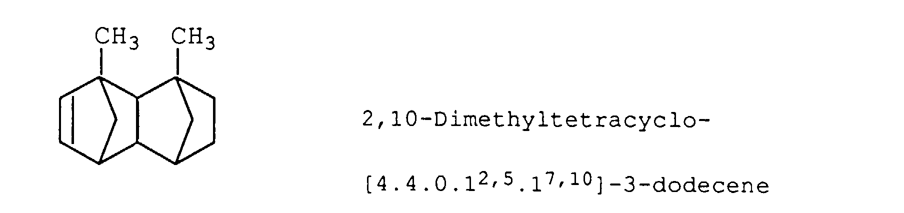

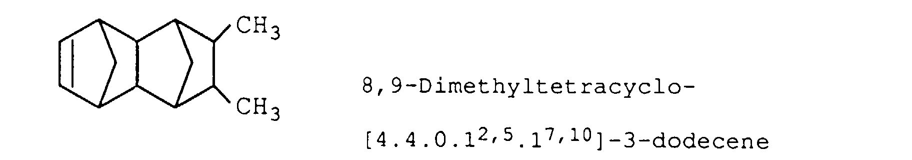

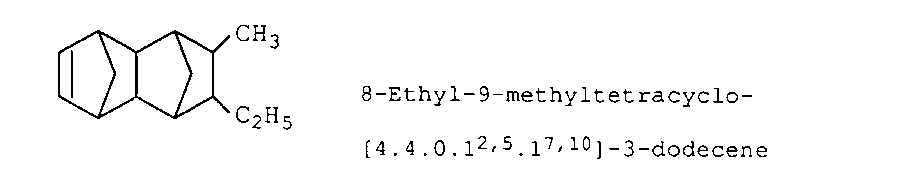

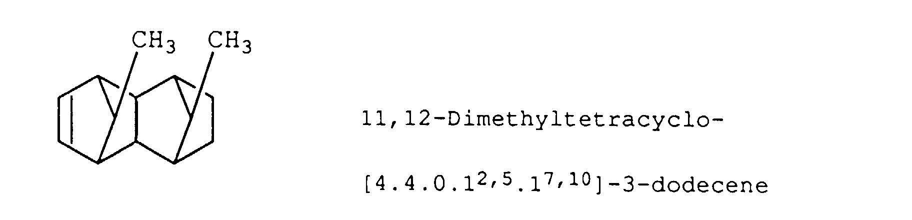

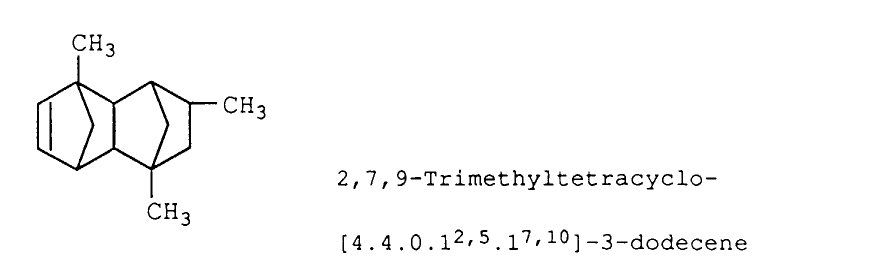

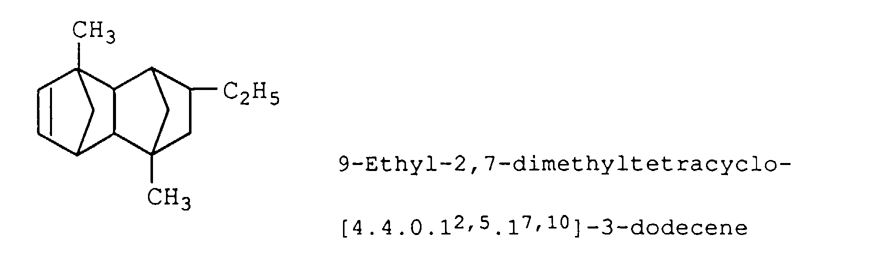

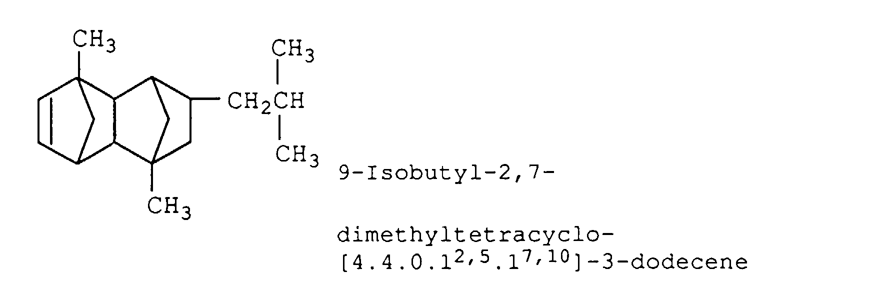

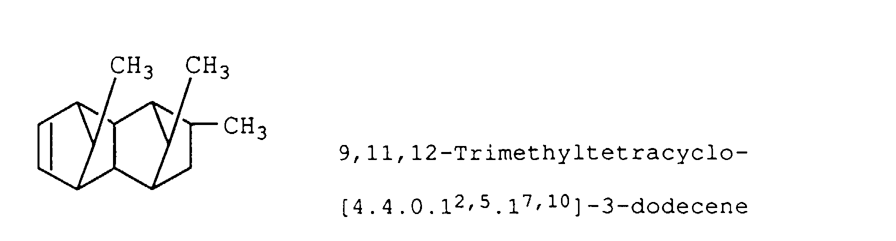

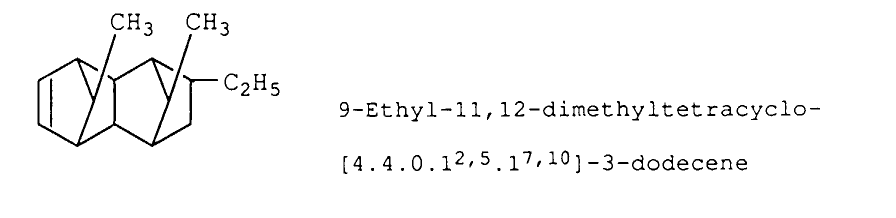

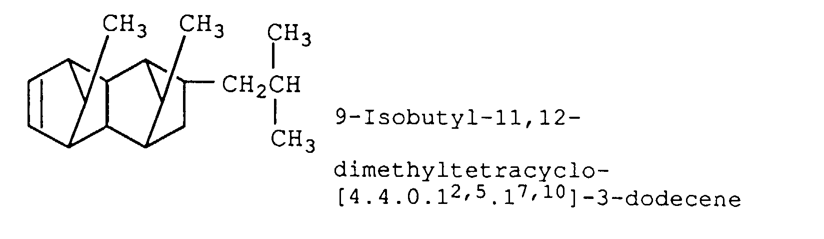

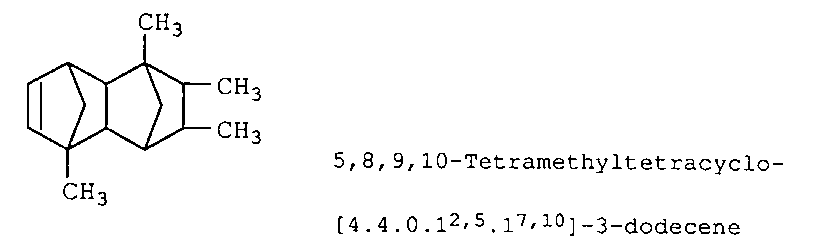

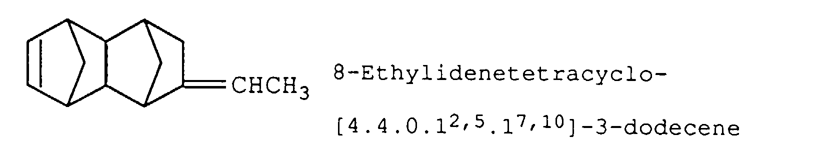

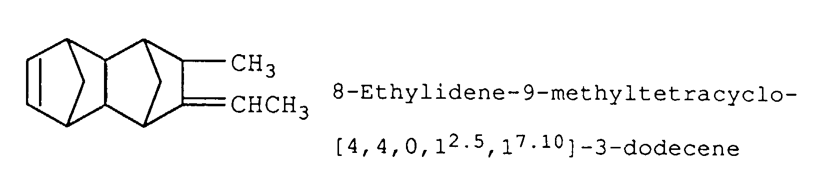

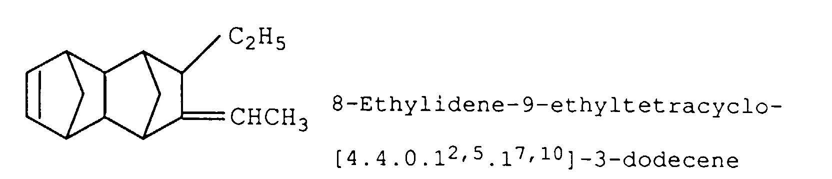

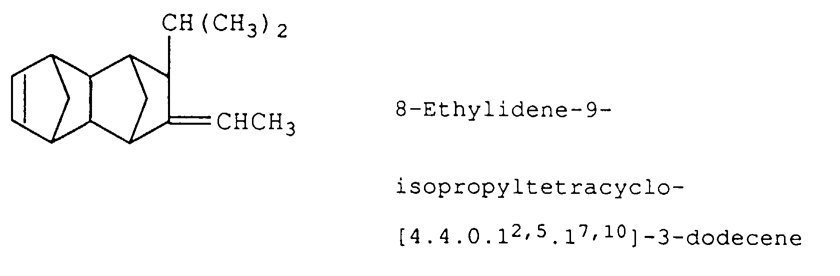

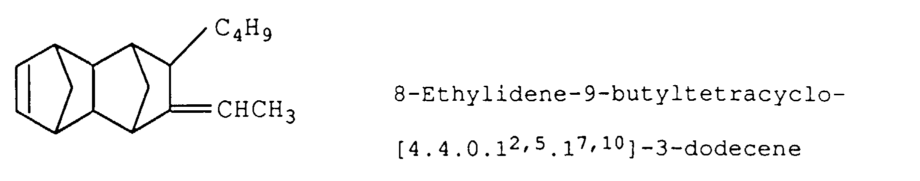

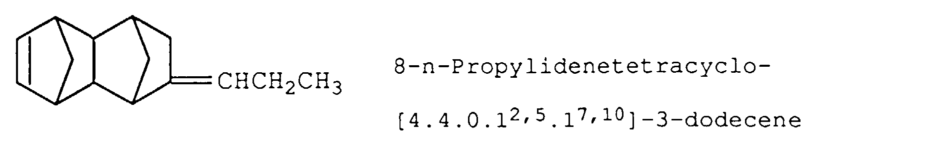

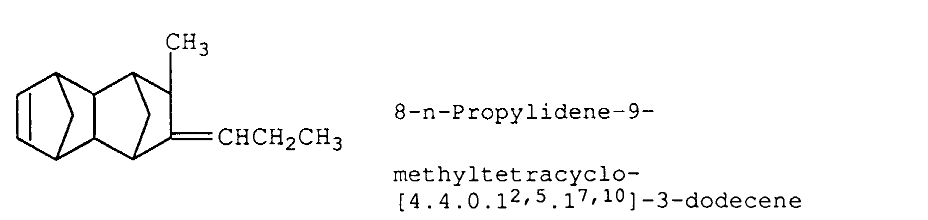

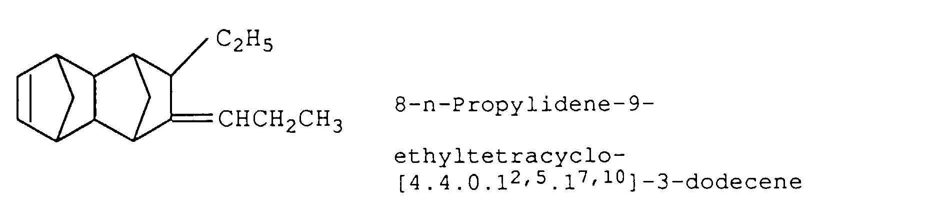

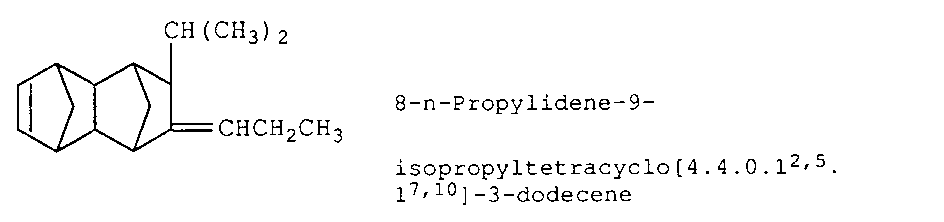

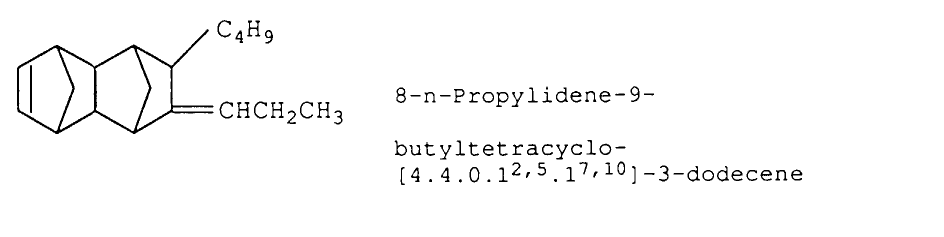

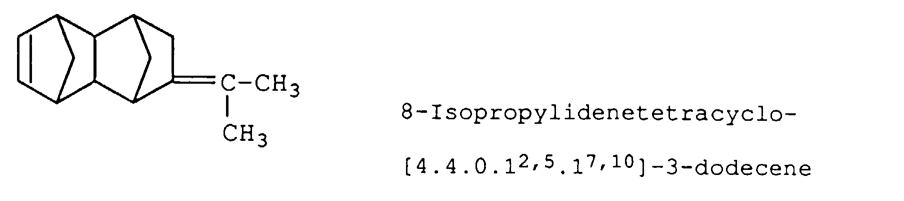

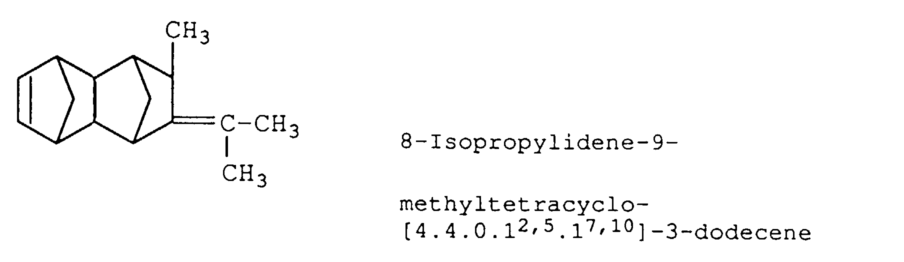

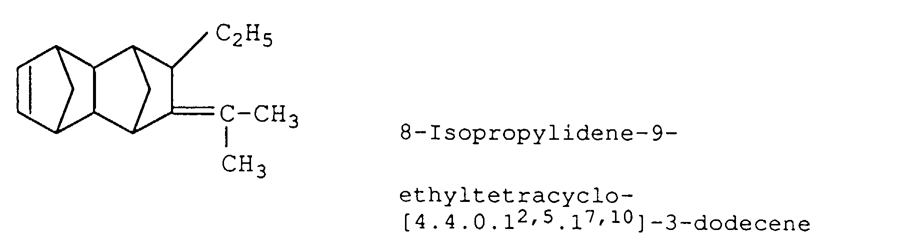

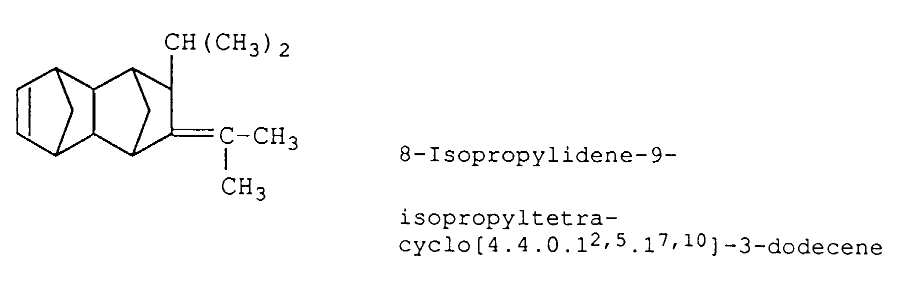

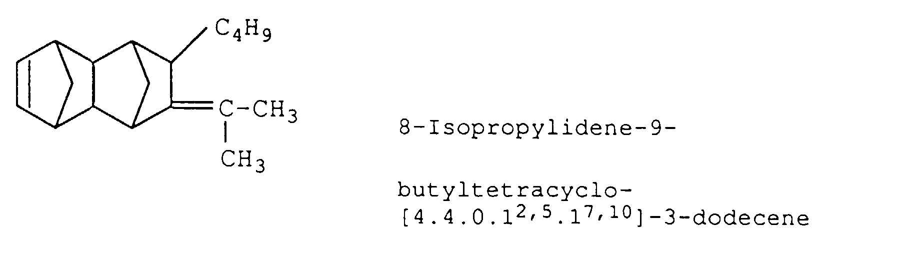

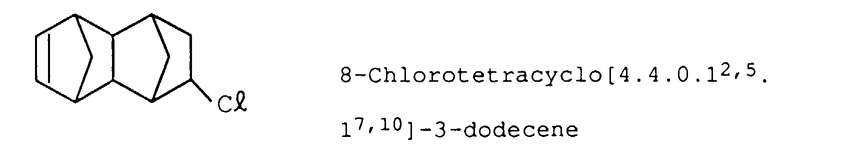

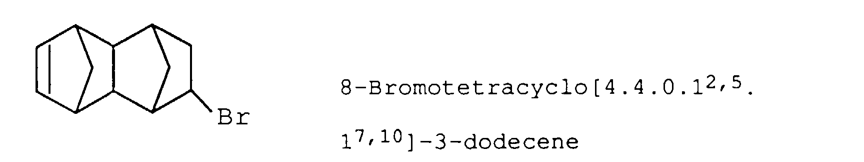

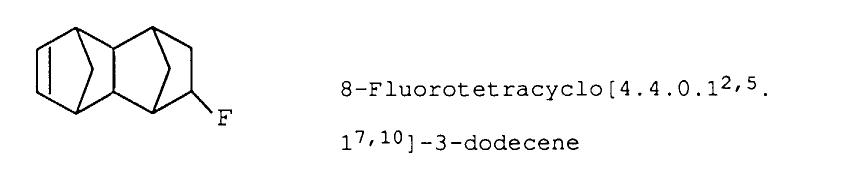

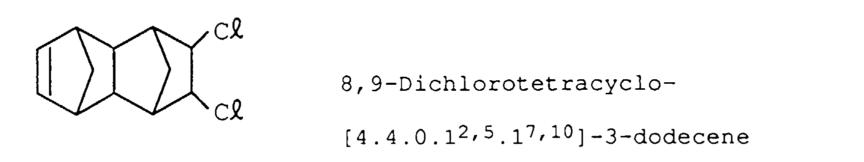

Hexacyclo[6.6.1.1^{3,6}.1^{10,13}.0^{2,7}.0^{9,14}]-4-heptadecene derivatives such as those mentioned below.

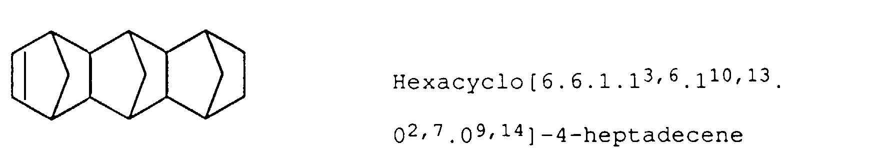

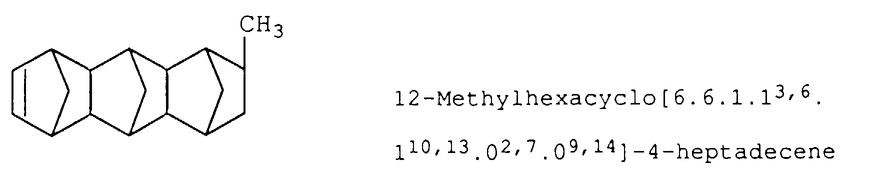

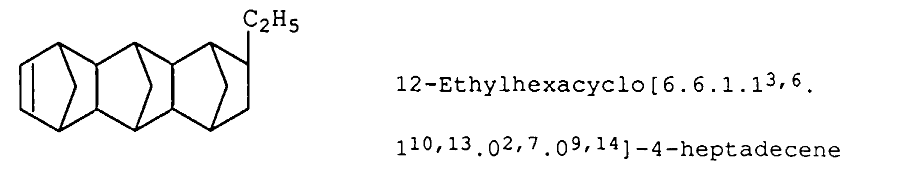

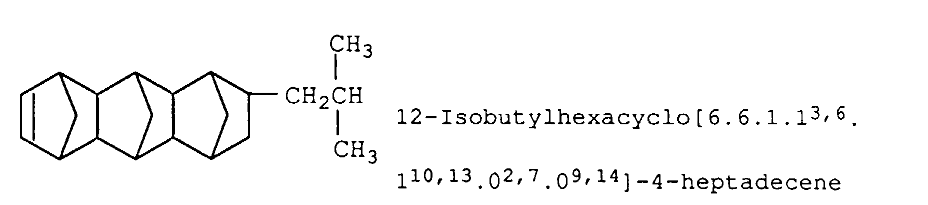

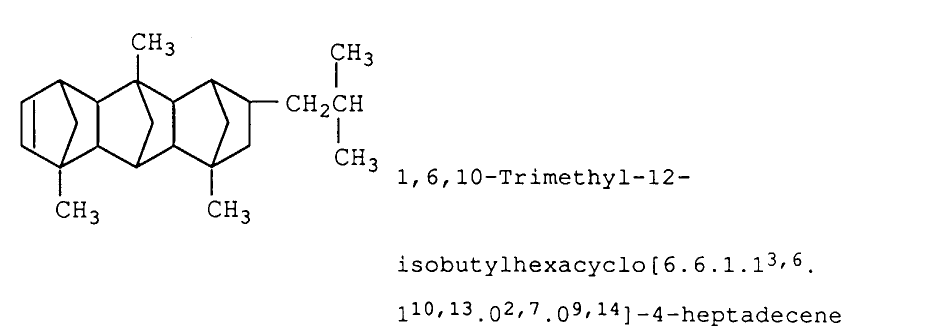

Octacyclo[8.8.0.1^{2,9}.1^{4,7}.1^{11,18}.1^{13,16}.0^{3,8}.0^{12,17}]-5-docosene derivatives such as those mentioned below.

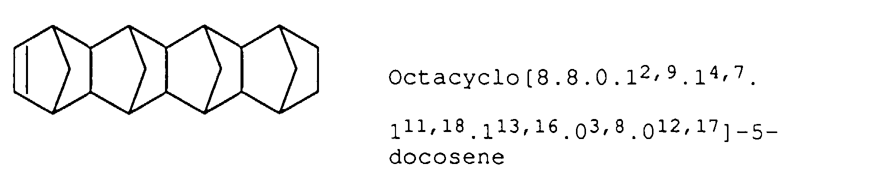

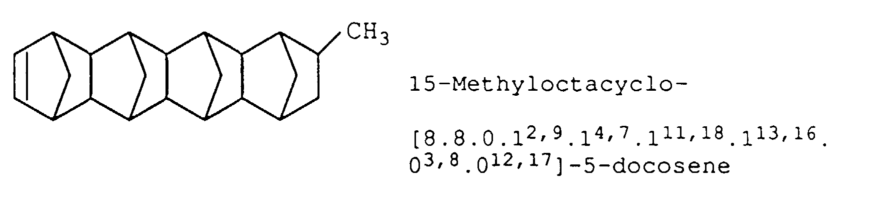

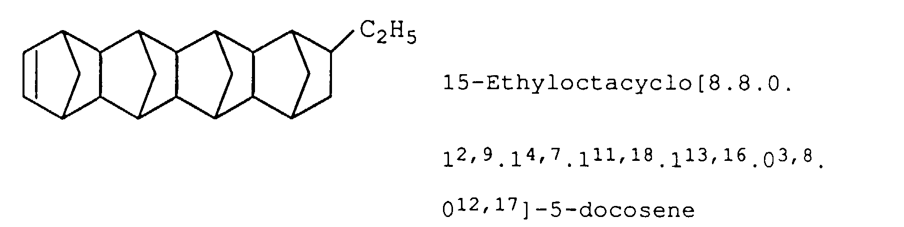

Pentacyclo[6.6.1.1^{3,6}.0^{2,7}.0^{9,14}]-4-hexadecene derivatives such as those mentioned below.

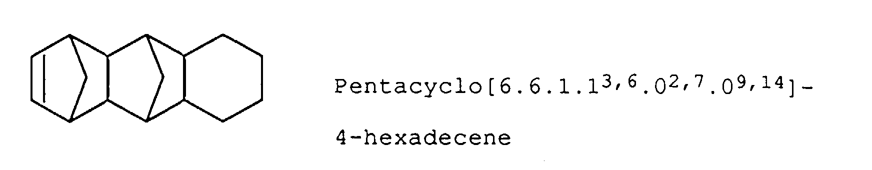

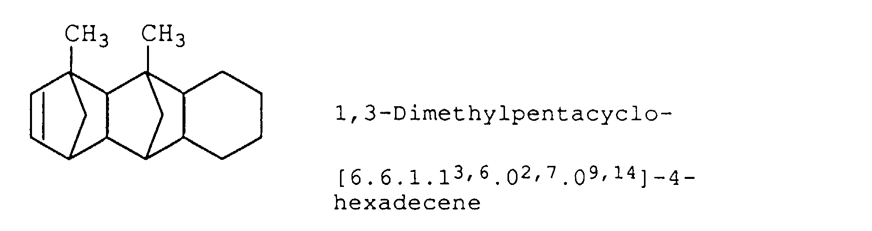

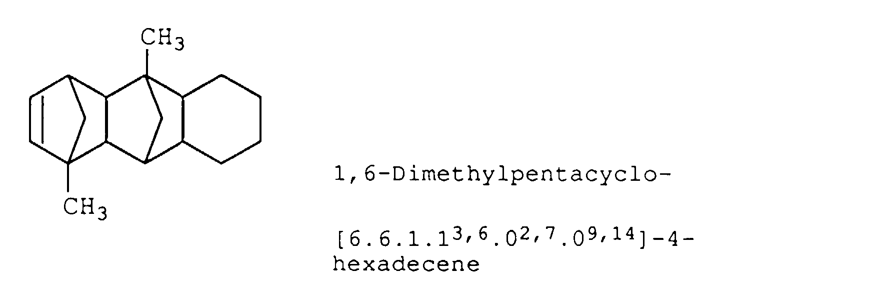

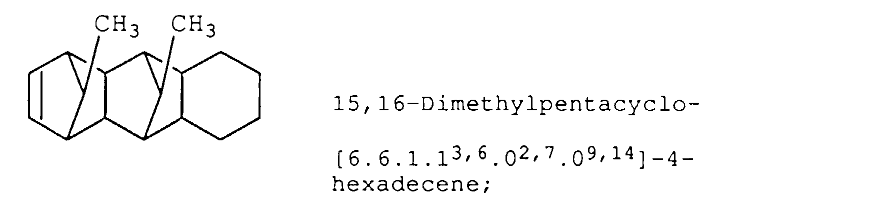

Heptacyclo-5-eicosene derivatives or heptacyclo-5-heneicosene derivatives such as those mentioned below.

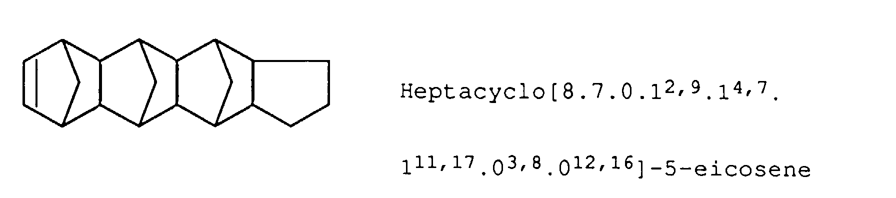

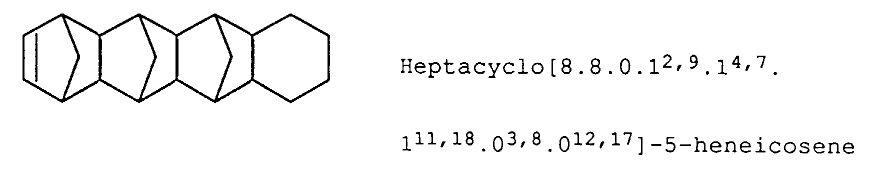

Tricyclo[4,3,0,1^{2,5}]-3-decene derivatives such as those mentioned below.

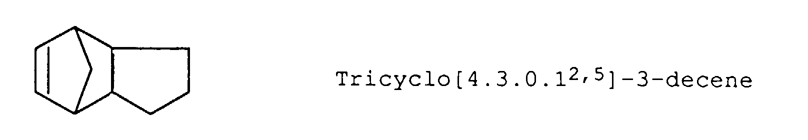

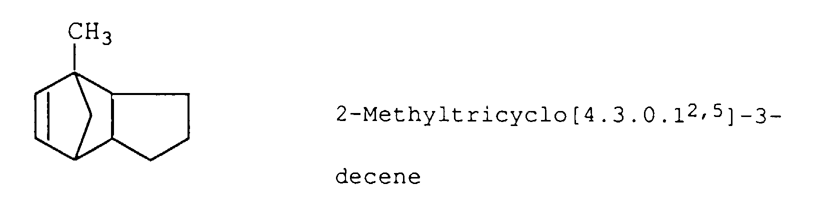

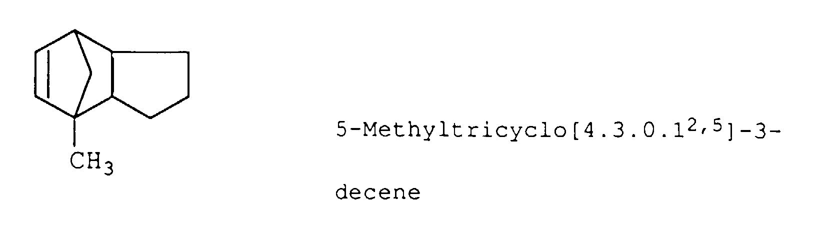

Tricyclo[4.4.0.1^{2,5}]-3-undecene -undecene derivatives such as those mentioned below.

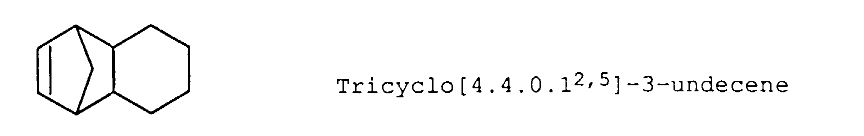

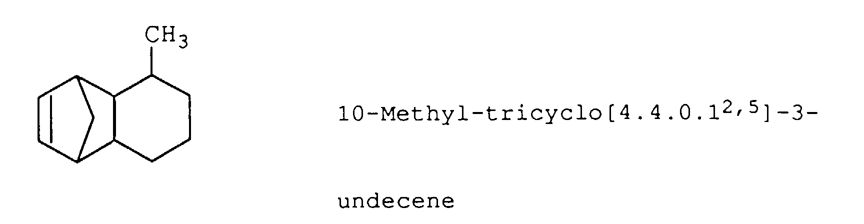

Pentacyclo[6.5.1.1^{3,6}.0^{2,7}.0^{9,13}]-4-pentadecene derivatives such as those mentioned below.

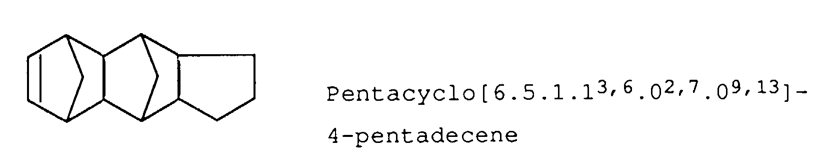

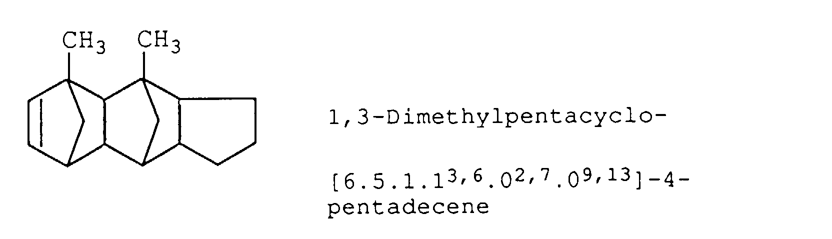

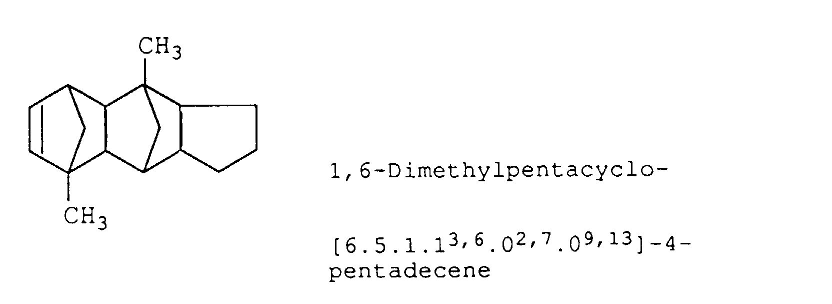

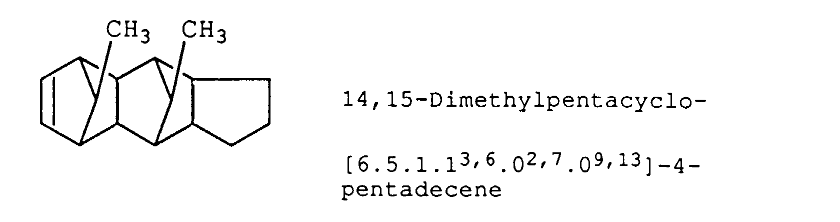

Diene compounds such as mentioned below.

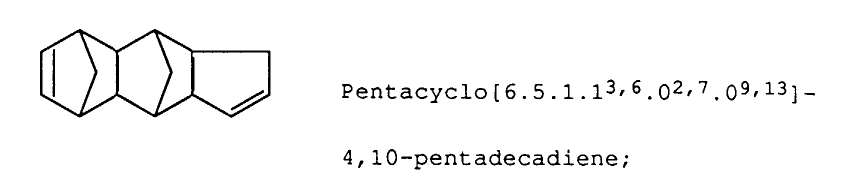

Pentacyclo[7.4.0.1^{2,5}.1^{9,12}.0^{8,13}]-3-pentadecene derivatives such as those mentioned below.

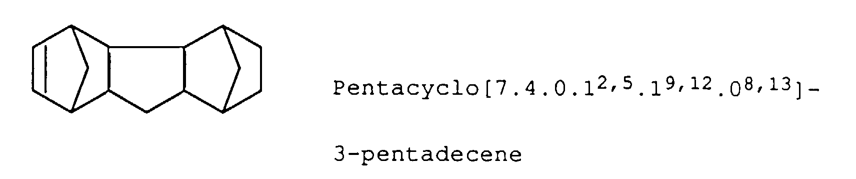

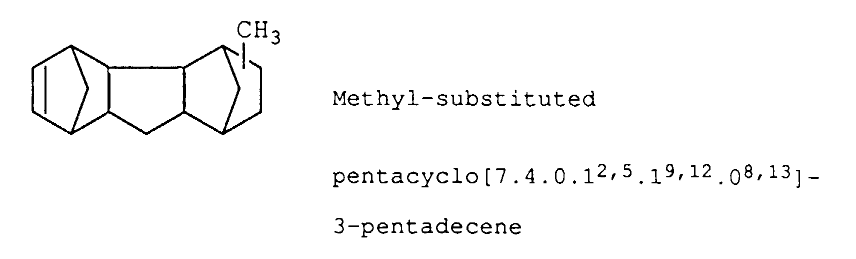

Heptacyclo[8.7.0.1^{3,6}.1^{10,17}.1^{12,15}.0^{2,7}.0^{11,16}]-4-eicosene derivatives such as those mentioned below.

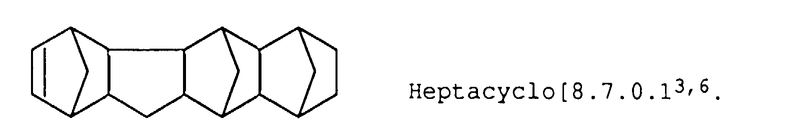

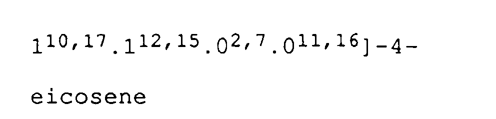

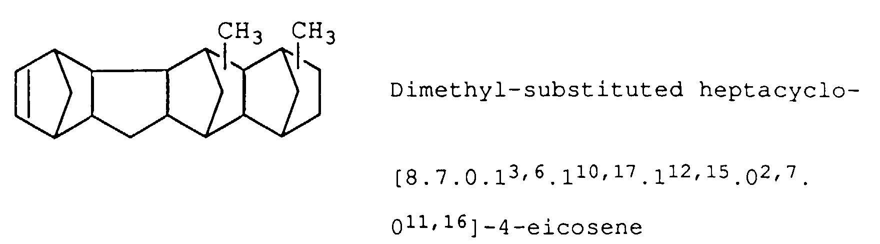

Nonacyclo[10.9.1.1^{4,7}.1^{13,20}.1^{15,18}.0^{3,8}.0^{2,10},0^{12,21}. 0^{14,19}]-5-pentacosene derivatives such as those mentioned below.

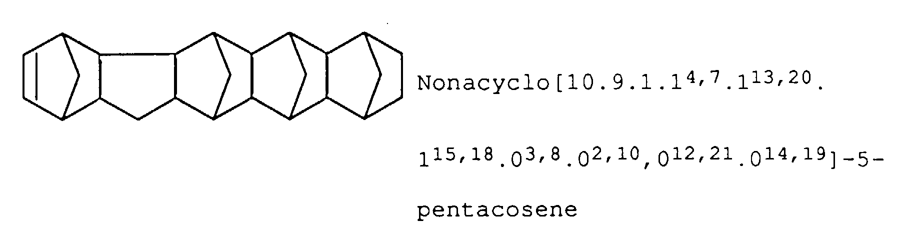

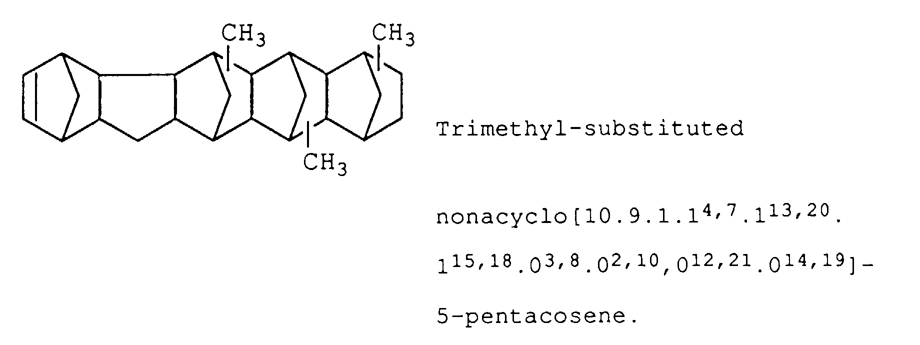

Pentacyclo[8.4.0.1^{2,5}.1^{9,12}.0^{8,13}]-3-hexadecene derivatives such as those mentioned below.

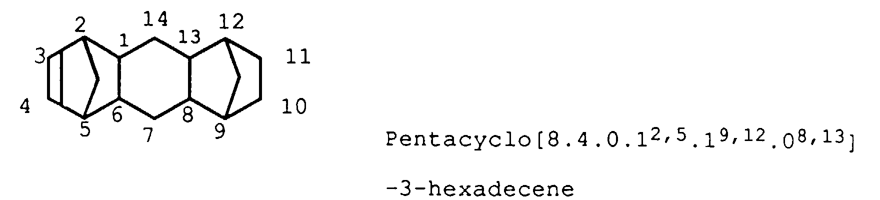

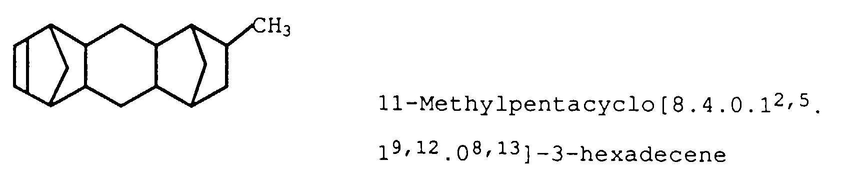

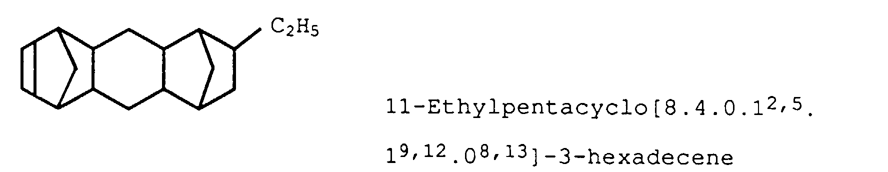

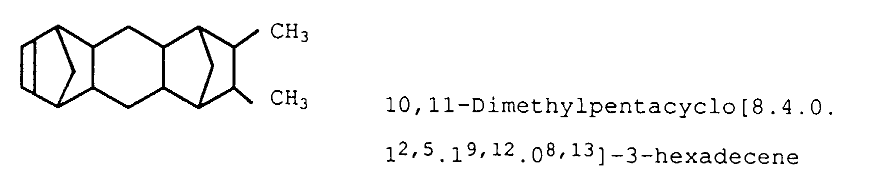

Heptacyclo[8.8.0.1^{4,7}.1^{11,18}.1^{13,16}.0^{3,8}.0^{12,17}]-5-heneicosene derivatives such as those mentioned below.

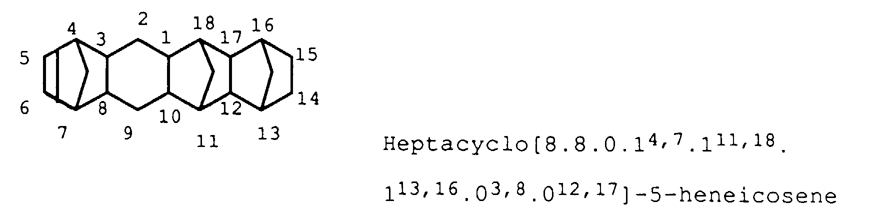

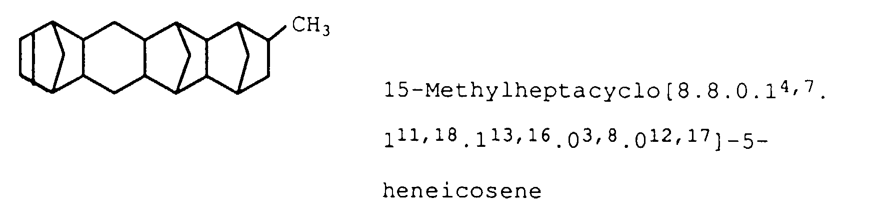

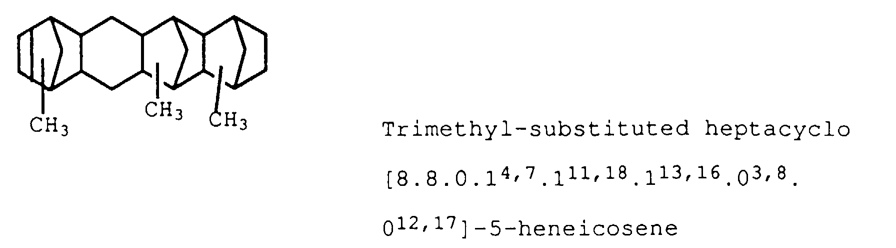

Nonacyclo [10.10.1.1^{5,8}.1^{14,21}.1^{16,19}.0^{2,11}.0^{4,9}. 0^{13,22}.0^{15,20}]-6-hexacosene derivatives such as those mentioned below.

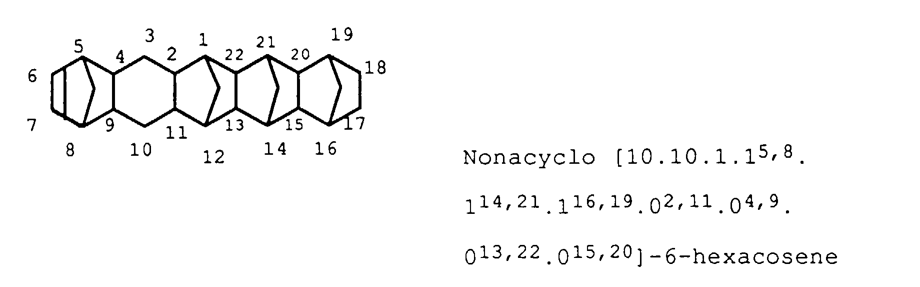

The cycloolefin random copolymer (a-1) used in the preparation of the graft modified cycloolefin resin (a) of the present invention is explained below.

The cycloolefin random copolymer (a-1) is prepared by, for example, copolymerizing ethylene and an unsaturated monomer represented by the above formula [I] in a liquid phase in the presence of a catalyst.

In the invention, monomers which are copolymerized with the cycloolefin represented by formula [I] to form the cycloolefin random copolymer is ethylene. Olefin compounds other than ethylene may also be copolymerized with the cycloolefin and ethylene to form the cycloolefin random copolymer used in the present invention.

Examples of other olefin compounds copolymerizable with ethylene and the cycloolefin compound having the formula [I] include
α-olefins having from 3 to 20 carbon atoms such as propylene, 1-butene, 4-methyl-1-pentene, 1-hexene, 1-octene, 1-decene, 1-dodecene, 1-tetradecene, 1-hexadecene, 1-octadecene and 1-eicosene;
cycloolefins such as cyclopentene, cyclohexene, 3-methylcyclohexene, cyclooctene and 3a, 5, 6,7a-tetrahydro-4, 7-methano-1H-indene;
non-conjugated dienes such as 1,4-hexadiene, 4-methyl-1, 4-hexadiene, 5-methyl-1, 4-hexadiene, 1,7-octadiene, dicyclopentadiene, 5-ethylidene-2-norbornene and 5-vinyl-2-norbornene; and
norbornene compounds such as norbornene-2, 5-methylnorbornene-2, 5-ethylnorbornene-2, 5-isopropylnorbornene-2, 5-n-butylnorbornene-2, 5-iso-butylnorbornene-2, 5,6-dimethylnorbornene-2, 5-chloronorbornene-2, 2-fluoronorbornene-2 and 5,6-dichloronorbornene-2.

The above-mentioned other olefins can be employed singly or in combination.

The reaction of ethylene with the cycloolefin having the formula [I] is usually carried out in a hydrocarbon solvent.

Examples of the hydrocarbon solvents employed herein include aliphatic hydrocarbons such as hexane, heptane, octane and kerosene; alicyclic hydrocarbons such as cyclohexane and methylcyclohexane; and aromatic hydrocarbons such as benzene, toluene and xylene. Moreover, among the polymerizable unsaturated monomers used in the preparation of the cycloolefin random copolymer, there may also be used, as a reaction solvent, those monomers which are liquid at a reaction temperature.

The above-mentioned solvents can be employed singly or in combination.

As catalysts used in the copolymerization reaction of the olefins with the cycloolefins represented by the formula [I], there can be employed a catalyst comprising a vanadium compound which is soluble in the above-described hydrocarbon solvent used as a reaction medium and an organoaluminum compound.

As the vanadium compounds which can be used as a catalyst, there can be mentioned compounds having the formula

VO(OR)ₐX_{b}

or V(OR)_{c}X_{d} wherein R is a hydrocarbon group, X is halogen, and a, b, c and d are numbers satisfying 0 ≤ a ≤ 3, 0 ≤ b ≤ 3, 2 ≤ a + b ≤ 3, 0 ≤ c ≤ 4, 0 ≤ d ≤ 4, and 3 ≤ c + d ≤ 4.

Moreover, the vanadium compounds represented by the above formulas may also be adducts of an electron donor. Concrete examples of the vanadium compounds include

VOCl₃,

VO(OC₂H₅)Cl₂,

VO(OC₂H₅)₂Cl,

VO(O-iso-C₃H₇)Cl₂,

VO(O-n-C₄H₉)Cl₂,

VO(OC₂H₅)₃,

VOBr₂,

VCl₄,

VOCl₂,

VO(O-n-C₄H₉)₃,

and

VCl₃·2(OC₈H₁₇OH)

The above-described vanadium compounds can be employed alone or in combination.

The electron donors forming the adducts together with the vanadium compounds are, for example,
oxygen-containing electron donors such as alcohols having 1 to 18 carbon atoms, phenols (which may have lower alkyl group) having 6 to 20 carbon atoms, ketones having 3 to 15 carbon atoms, aldehydes having 2 to 15 carbon atoms, carboxylic acids having 2 to 30 carbon atoms, esters of organic or inorganic acids, acid halides having 2 to 15 carbon atoms, ethers having 2 to 20 carbon atoms, acid amides, acid anhydrides and alkoxysilanes; and
nitrogen-containing electron donors such as ammonia, amines, nitriles and isocyanates. The illustrated electron donors may be used alone or in combination.

The organoaluminum compounds used as the catalyst in the invention are compounds having at least one Al-C bond in the molecule.

One example of such organoaluminum compounds is represented by the formula (i):

R¹ ₘAl(OR²)ₙHₚX_{q} (i)

wherein R¹ and R² each independently represent a hydrocarbon group having normally from 1 to 15, preferably from 1 to 4 carbon atoms; X is halogen; and m, n, p and q are numbers satisfying 0 ≤ m ≤ 3, 0 ≤ n < 3, 0 ≤ p < 3, 0 ≤ q < 3, and m + n + p + q = 3 .

Another example of such compounds is a complex alkyl compound of aluminum and a metal of Group I, represented by the formula (ii):

M¹AlR¹ ₄ (ii)

wherein M¹ is Li, Na or K; and R¹ is as defined above.

Examples of the organoaluminum compounds having the formula (i) include:
compounds having the formula of R¹ₘAl(OR²)₃₋ₘ wherein R¹ and R² are as defined above, and m is a number preferably satisfying 1.5 ≤ m < 3;
compounds having the formula of R¹ₘAlX₃₋ₘ wherein R¹ and X are as defined above, and m is a number preferably satisfying 0 < m < 3;
compounds having the formula of R¹ₘAlH₃₋ₘ wherein R¹ is as defined above, and m is a number preferably satisfying 2 ≤ m < 3; and
compounds having the formula of R¹ₘAl(OR²)ₙX_{q} wherein R¹, R² and X are as defined above, and m, n and q are numbers satisfying 0 < m ≤ 3, 0 ≤ n < 3, 0 ≤ q < 3 and m + n + q = 3.

Concrete examples of the organoaluminum compounds having the formula (i) include
trialkylaluminum compounds such as triethylaluminum, tributylaluminum and triisopropylaluminum;
dialkylaluminum alkoxides such as diethylaluminum ethoxide and dibutylaluminum butoxide;
alkylaluminum sesquialkoxides such as ethylaluminum sesquiethoxide and butylaluminum sesquibutoxide;
partially alkoxylated alkyl aluminum compounds such as those having an average composition represented by, for example, the formula of R¹_{2.5}Al(OR²)_{0.5} ;
dialkylaluminum halides such as diethylaluminum chloride, dibutylaluminum chloride and diethylaluminum bromide;
alkylaluminum sesquihalides such as ethylaluminum sesquichloride, butylaluminum sesquichloride and ethylaluminum sesquibromide;
partially halogenated alkylaluminum compounds such as ethylaluminum dichloride, propylaluminum dichloride and butylaluminum dibromide;
dialkylaluminum hydrides such as diethylaluminum hydride and dibutylaluminum hydride;
partially hydrogenated alkylaluminum compounds such as ethylaluminum dihydride and propylaluminum dihydride (alkylaluminum dihydride); and
partially alkoxylated and halogenated alkylaluminum compounds such as ethylaluminum ethoxychloride, butylaluminum butoxychloride and ethylaluminum ethoxybromide.

Furthermore, the organoaluminum compounds may be such compounds being similar to those having the above-mentioned formula (i) as organoalumiunm compounds in which two aluminum atoms are bonded together via, for example, an oxygen atom or a nitrogen atom. Concrete examples of such compounds are as follows:

(C₂H₅)₂AlOAl(C₂H₅)₂,

(C₄H₉)₂AlOAl(C₄H₉)₂,

and

(C₂H₅)₂AlN(C₆H₅)Al(C₂H₅)₂.

Examples of the organoaluminum compounds having the formula (ii) include

LiAl(C₂H₅)₄,

and

LiAl(C₇H₁₅)₄.

Among the above-exemplified compounds, particularly preferred are alkylaluminum halides, alkylaluminum dihalides and mixtures thereof.

The vanadium compounds are used in such a manner that the concentration of the vanadium compounds in the reaction system is normally 0.01 - 5 gram atom/liter, preferably 0.05 - 3 gram atom/liter in terms of vanadium atoms. The organoaluminum compounds are used in such a manner that the ratio of aluminum atoms to vanadium atoms (Al/V) in the polymerization system is normally at least 2, preferably 2-50, and particularly preferably 3 - 20.

The cycloolefin random copolymer (a-1) obtained by using the above-mentioned catalysts generally contains repeating units derived from ethylene in an amount of 52 to 90 mol %, preferably 55 to 80 mol %, and repeating units derived from a cycloolefin in an amount of 10 - 48 mol%, preferably 20 to 45 mol %. When the cycloolefin random copolymer comprises repeating units derived from α-olefin other than ethylene, the cycloolefin random copolymer may generally contain repeating units derived from the α-olefin in an amount of less than 20 mol%, preferably less than 10 mol%. In the cycloolefin random copolymer used in the invention, the repeating units derived from an olefin such as ethylene and the repeating units derived from a cycloolefin are substantially linearly arranged in the molecule and these repeating units are randomly arranged.

In the cycloolefin copolymer (a-1) used in the invention, it is considered that the repeating units derived from the cycloolefin of the formula [I] have the structure represented by the following formula [II]: 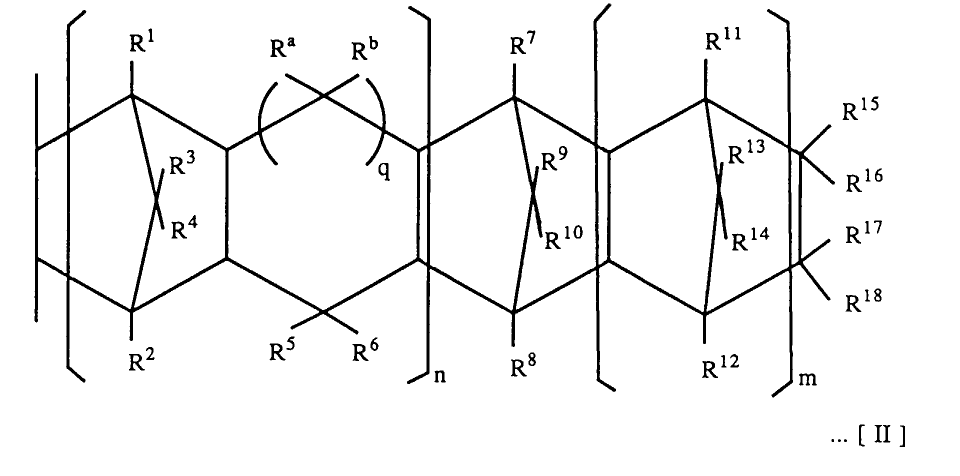 wherein m, n, q, R¹-R¹⁸, R^{a} and R^{b} are as defined in the aforementioned formula [I].

Next, the ring opening polymer of cycloolefin (a-2) and the hydrogenated ring opening polymer which are used in the preparation of the graft modified cycloolefin resin (a) are explained below.

The ring opening polymer of cycloolefin (a-2) is prepared by polymerization or copolymerization of cycloolefin or cycloolefins in the presence of a catalyst comprising halides, nitrate or acetylacetonate of ruthenium, rhodium, palladium, osmium, indium or platinum, and reducing agent, or presence of a catalyst comprising halides or acetylacetonate of titanium, palladium, zirconium or molybdenum, and organoaluminum compound.

It is considered that at least a part of the cycloolefin represented by formula [I] has the structure represented by the following formula [III] in this ring opening polymer of cycloolefin: 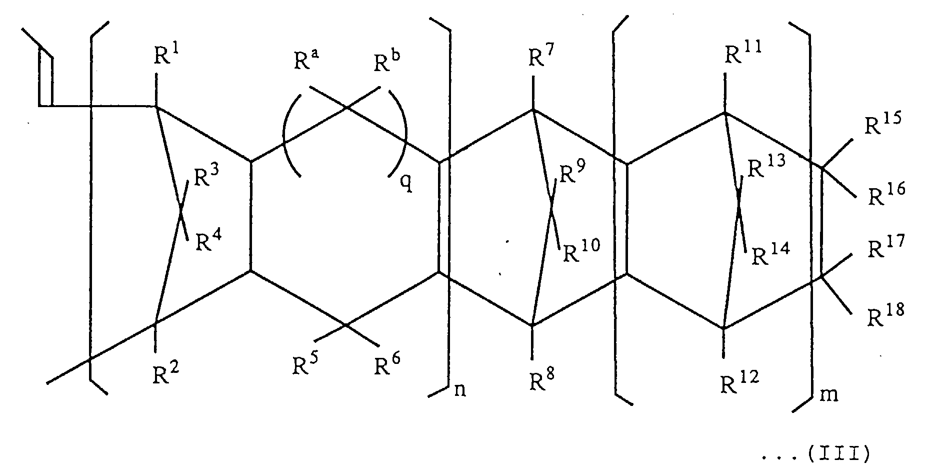 wherein m, n, q, R¹-R¹⁸, R^{a} and R^{b} are as defined in the aforementioned formula [I].

The hydrogenated products of these ring opening polymers (a-3) are produced by reducing the above-obtained ring opening polymer of cycloolefin by hydrogen in the presence of a hydrogenating catalyst.

It is considered that at least a part of the cycloolefin represented by formula [I] has the structure represented by the following formula [III] in this hydrogenated ring opening polymer (a-3): 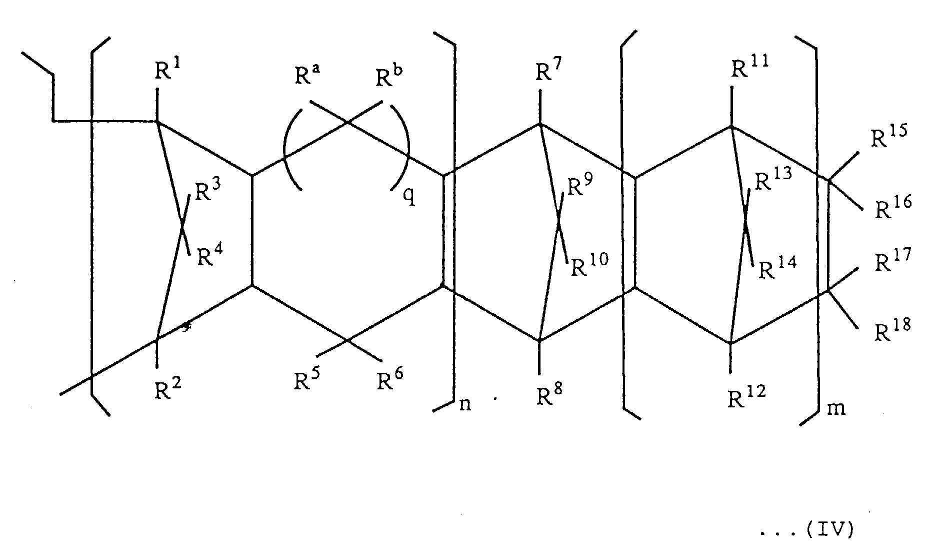 wherein m, n, q, R¹-R¹⁸, R^{a} and R^{b} are as defined in the aforementioned formula [I].

Of these cycloolefin resins, preferably used are those having an intrinsic viscosity [η] of usually from 0.01 to 10 dl/g, preferably from 0.05 to 10 dl/g, more preferably from 0.3 to 2.0 dl/g, particularly 0.4 to 1.2 dl/g as measured at 135 °C in decalin. This cycloolefin resin has a softening temperature (TMA) of 70 °C or more, preferably from 70 to 200 °C, more preferably from 100 to 180 °C as measured by a thermal mechanical analyzer, a glass transition temperature (Tg) of usually from 50 to 190 °C, preferably from 80 to 170 °C and a crystallinity index of from 0 to 20 %, preferably 0 to 2 % as measured by X-ray diffractometry.

The graft modified cycloolefin resin (a) used in the invention may be prepared by graft modifying the above-mentioned cycloolefin resin with a graft monomer.

The graft monomer used for the production of the graft modified cycloolefin resin (a) is preferably an unsaturated carboxylic acid or a derivative thereof. Examples of the unsaturated carboxylic acid include acrylic acid, maleic acid, fumaric acid, tetrahydrophthalic acid, itaconic acid, citraconic acid, crotonic acid, isocrotonic acid and nadic acid™ (endocis-bicyclo[2,2,1]hept-5-ene-2,3-dicarboxylic acid). The derivatives of the above-mentioned unsaturated carboxylic acids are unsaturated carboxylic acid anhydrides, unsaturated carboxylic acid halides, unsaturated carboxylic acid amides, unsaturated carboxylic acid imides and ester compounds of unsaturated carboxylic acids. Concrete examples of these derivatives include maleyl chloride, maleimide, maleic anhydride, citraconic anhydride, monomethyl maleate, dimethyl maleate, glycidyl maleate, glycidyl acrylate and glycidyl methacrylate.

These graft monomers exemplified above may be used either singly or in combination.

Of the above-exemplified graft monomers, preferred are unsaturated dicarboxylic acids or anhydride thereof, and particularly preferred are maleic acid and nadic acid™ or acid anhydrides thereof, or glycidyl acrylate and glycidyl methacrylate.

The graft modified cycloolefin resin (a) used in the invention may be prepared, for example, by graft polymerizing the above-mentioned graft monomer on a cycloolefin resin according to various processes known, per se. For instance, there is a process wherein the above-mentioned cycloolefin resin is melted, and the graft monomer is graft polymerized on the molten cycloolefin resin, or a process wherein the cycloolefin resin is dissolved in a solvent, and the graft monomer is graft polymerized on the cycloolefin resin dissolved in the solution.

In the present invention, a graft modified cycloolefin resin prepared by any of the above-mentioned processes may be used. The modification ratio (graft ratio) of the graft modified cycloolefin resin used in the invention is usually 0.01-5% by weight, preferably 0.1-4.0% by weight.

In order to make graft copolymerization of the above-mentioned graft monomer proceed efficiently, the reaction therefor is desirably carried out in the presence of a radical initiator. The graft reaction is carried out at a temperature of usually 60-350°C. The proportion of the radical initiator used is usually 0.001-5 parts by weight based on 100 parts by weight of the unmodified-cycloolefin resin.

Preferably useful radical initiators in the present invention include organic peroxides and organic peresters. Concrete examples of such radical initiators include benzoyl peroxide, dichlorobenzoyl peroxide, dicumyl peroxide, di-tert-butyl peroxide, 2,5-dimethyl-2,5-di(peroxybenzoate)hexine-3, 1,4-bis(tert-butylperoxyisopropyl)benzene, lauroyl peroxide, tert-butyl peracetate, 2,5-dimethyl-2,5-di(tert-butylperoxy)hexine-3, 2, 5-dimethyl-2, 5-di(tert-butylperoxy)hexane, tert-butyl perbenzoate, tert-butyl perphenylacetate, tert-butyl perisobutylate, tert-butyl per-sec-octylate, tert-butyl perpivalate, cumyl perpivalate and tert-butyl perdiethylacetate. Further, azo compounds may also be used as the radical initiator in the invention. Concrete examples of the azo compounds include azobisisobutyronitrile and dimethyl azoisobutylate.

Of these radical initiators, preferred are dialkyl peroxides such as benzoyl peroxide, dicumyl peroxide, di-tert-butyl peroxide, 2,5-dimethyl-2,5-di(tert-butylperoxy)hexine-3, 2,5-dimethyl-2,5-di(tert-butylperoxy)hexane and 1,4-bis(tert-butylperoxyisopropyl)benzene.

The elastomer (b) used in the invention is an α-olefin copolymer rubber having a tensile modulus, as measured at 23°C, of usually 0.1-2000 kg/cm², preferably 1-1500 kg/cm², and said elastomer (b) is not modified with any graft monomers.

Further, this elastomer (b) has a glass transition temperature (Tg) of 0°C or less, preferably from -150 to 0°C, more preferably from -80 to -20°C, an intrinsic viscosity [η], as measured in decalin at 135°C, of 0.2-10 dl/g, preferably 1-5 dl/g, a density of usually 0.82-0.96 g/cm³, preferably 0.84-0.92 g/cm³, and a crystallinity index, as measured by X-ray diffractometry, of usually not more than 30%, preferably not more than 25%, that is, this elastomer is preferably-low-crystalline or amorphous.

The α-olefin copolymer elastomer (b) used in the present invention includes concretely (c-1) an ethylene/α-olefin copolymer rubber, and (c-2) a propylene/α-olefin copolymer rubber. The ethylene/α-olefin copolymer rubber (c-1) and the propylene/α-olefin copolymer rubber (c-2) may be used either singly or in combination.

The constituent α-olefins used in the preparation of the above-mentioned ethylene/α-olefin copolymer rubber (c-1) may include usually those having 3-20 carbon atoms, for example, propylene, 1-butene, 1-pentene, 1-hexene, 4-methyl-1-pentene, 1-octene, 1-decene and mixtures thereof. Of these α-olefins exemplified above, particularly preferred are propylene and/or 1-butene.

The constituent α-olefins used in the preparation of the above-mentioned propylene/α-olefin copolymer rubber (c-2) may include usually those having 4-20 carbon atoms, for example, 1-butene, 1-pentene, 1-hexene, 4-methyl-1-pentene, 1-octene, 1-decene and mixtures thereof. Of these α-olefins exemplified above, particularly preferred is 1-butene.

So long as no characteristics of elastomers (b) are marred, the elastomers (b) used in the invention may contain such component units other than the component units derived from α-olefins such as derived from diene compounds.

For example, the above-mentioned other component units permitted to be contained in the α-olefin copolymers used in the invention include component units derived from chain non-conjugated dienes such as 1,4-hexadiene, 1,6-octadiene, 2-methyl-1,5-hexadiene, 6-methyl-1,5-heptadiene and 7-methyl-1, 6-octadiene;
cyclic non-conjugated dienes such as cyclohexadiene, dicyclopentadiene, methyltetrahydroindene, 5-vinylnorbornene, 5-ethylidene-2-norbornene, 5-methylene-2-norbornene, 5-isopropylidene-2-norbornene and 6-chloromethyl-5-isopropenyl-2-norbornene; and
diene compounds such as 2,3-diisopropylidene-5-norbornene, 2-ethylidene-3-isopropylidene-5-norbornene and 2-propenyl-2,2-norbornadiene. The content in the α-olefin copolymer of repeating units derived from the above-mentioned diene components is usually less than 10 mol%, preferably not more than 5 mol%.

In the ethylene/α-olefin copolymer (c-1), the molar ratio (ethylene/α-olefin) of ethylene to α-olefin, though it varies depending upon the kind of α-olefin used, is generally from 10/90 to 99/1, preferably from 50/50 to 95/5. The above-mentioned molar ratio is preferably from 50/50 to 90/10 when α-olefin is propylene, and is preferably from 80/20 to 95/5 when α-olefin is that which has 4 or more carbon atoms.

In the propylene/α-olefin copolymer (c-2), the molar ratio (propylene/α-olefin) of propylene to α-olefin, though it varies depending upon the kind of α-olefin used, is generally from 50/50 to 95/5. The above-mentioned molar ratio is preferably from 50/50 to 90/10 when α-olefin is 1-butene, and is preferably from 80/20 to 95/5 when α-olefin is that which has 5 or more carbon atoms.

Of the α-olefin copolymers used in the cycloolefin resin composition according to the invention, preferred are ethylene/propylene copolymers or ethylene/α-olefin copolymers having the ethylene content of 35-50 mol% and a crystallinity index of not more than 10%.

The modified elastomer (c) used in the cycloolefin resin composition according to the present invention is prepared by graft modifying the above-mentioned elastomer (b) with graft monomers.

Graft monomers used for preparing the graft modified elastomer (c) are the same as those mentioned in the production of the graft modified cycloolefin resin (a).

Method for graft modifying the elastomer (b) is the same as that mentioned in the production of the graft modified cycloolefin resin (a).

The modification ratio (graft ratio) of the graft modified elastomer (c) is usually 0.01-10% by weight, preferably 0.1-4% by weight.

The cycloolefin resin composition of the present invention comprises polyamide resin as component (d).

The polyamide (d) used in the invention are various polyamides obtained, for example, by polycondensation reaction of diamine component with dicarboxylic acid component or by ring opening polymerization of a compound capable of forming amino and carboxyl groups or a functional derivative thereof.

Concrete examples of the polyamide used in the invention include nylon-6, nylon-66, nylon-610, nylon-11, nylon-612, nylon-12, copolymerized nylon formed from caprolactam and aqueous salt solution of nylon, nylon MXD6 formed from methaxylenediamine and adipic acid, nylon-46, methoxymethylated polyamide, polyhexamethylenediamine terephthalamide and polyhexamethylenediamine isophthalamide.

The polyamides exemplified above may be used in the invention either singly or in combination.

The polyamides referred to in the invention are condensates of diamine component and dicarboxylic acid component, condensates of ε-aminoundecane acid, or a ring opening polymer of lactams as mentioned above, and preferred are those having an intrinsic viscosity [η], as measured in 96% sulfuric acid at 25°C, of from 0.2 to 3.5 dl/g. In particular, it is preferable to use in the invention a polyamide having an intrinsic viscosity [η] of from 1.0 to 2.5 dl/g.

The cycloolefin resin composition according to the present invention comprises;
based on 100 parts by weight of the total sum of the graft modified cycloolefin resin (a), the elastomer (b), the modified elastomer (c) and polyamide resin (d),
(a) graft modified cycloolefin resin in an amount of 0.5 to 38 parts by weight, preferably 5 to 35 parts by weight,
(b) elastomer in an amount of 0 to 38 parts by weight, preferably 0.1 to 20 parts by weight, particularly 1 to 15 parts by weight,
(c) modified elastomer in an amount of 0 to 38 parts by weight, preferably 0.1 to 20 parts by weight, particularly 1 to 15 parts by weight, and
(d) polyamide resin in an amount of more than 60 parts by weight but not more than 99 parts by weight, preferably 65 to 90 parts by weight, more preferably 65 to 85 parts by weight.

The total sum of the elastomer (b) and the modified elastomer (c) is desirably in the range of 0.5 to 38 parts by weight, preferably 3 to 20 parts by weight, more preferably 4 to 10 parts by weight.

The cycloolefin resin composition of the present invention can be prepared, for example,
by a method wherein these components are mechanically mixed together, and the resulting mixture in a molten state is kneaded by means of melt kneading equipment, for example, a double-screw kneader,or
by a method wherein the components (a), (b) and (c) are mechanically mixed together, the resulting mixture is heated to a molten state by means of melt kneading equipment, for example, a double-screw kneader, and the component (d) is then added to the molten mixture, followed by kneading.

The cycloolefin resin composition of the invention may be prepared under suitably predetermined conditions by employing any methods as mentioned above.

In addition to the above-mentioned components (a) to (d), the cycloolefin resin composition of the invention may contain various additives such as inorganic fillers, organic fillers, heat stabilizers, weathering agents, antistatic agents, antislip agents, anti-blocking agents, anti-fogging agents, lubricants, pigments, dyes, natural oil, synthetic oil and wax. These additives may be added to the resin composition at any stage during the course of preparation of said composition.

In addition to the purposes for which common polyamides are used, the cycloolefin resin compositions of the invention are suitably applicable, in particular, to the field of materials, for which mechanical strength and adhesion of coating are required, such as filler-reinforced polyamide.

### EFFECT OF THE INVENTION

Molded articles formed by using the cycloolefin resin compositions of the present invention have high impact strength, low water absorption properties and excellent adhesion of coating.

Further, the cycloolefin resin compositions according to the present invention have such an advantage over polyamide that the compositions have high impact strength, low water absorption properties, excellent dimensional stability and excellent adhesion of coating.

The present invention is illustrated below with reference to examples, but it should be construed that the invention is in no way limited to those examples.

### [Method of evaluation]

Characteristics of the cycloolefin random copolymer and graft modified elastomer (also called graft modified elastomeric copolymer) used in the invention, and of the cycloolefin resin composition of the invention were determined in the following manner.

### Intrinsic viscosity [η]

The measurement was conducted in decalin at 135°C.

### Softening temperature (TMA)

Taken as TMA was the temperature at which a flat-ended needle of 1 mm in diameter penetrated under a load of 50 g to a depth of 100 µm into a test specimen heated at a rate of 5^{o}C/min.

### Content of graft monomer in graft modified elastomeric copolymer

The measurement was conducted by means of ¹³C-NMR.

### Crystallinity index

The measurement was conducted by means of X-ray diffractometry at 23^{o}C.

### Tensile modulus

A press molded test specimen of 2 mm in thickness was tested for at 23 ^{o}C in accordance with ASTM D 638.

### IZ impact strength

An injection-molded notched specimen of 1/8 inch in thickness was tested for at 23^{o}C in accordance with ASTM D 256.

### Melt index (MI)

The measurement was conducted at 260^{o}C under a load of 2.16 kg in accordance with JIS-K-6760.

### Water absorption

A test specimen of 100 mm x 100 mm x 2 mm^{t}, was immersed for 24 hours in water, water remaining on the surface of the specimen was removed, the thus immersed specimen was then weighed to obtain an increase in weight, and the increment was represented by percentage on the weight of the specimen prior to immersion.

### Adhesion of Coating

### [Preparation of coating and evaluation thereof]

(1) double fluid type acryl-urethane coating
   An injection-molded specimen (no primer) of 120 mm x 130 mm x 3 mm^{t}, was coated with double fluid type acryl-urethane coating material (trade name: Planet PH-2, produced by Origin Electronics, Co., thickness: 20 µm) by means of air-spray, and the specimen was stood for 10 minutes at room temperature. Subsequently, the coated material was cured at 80°C for 30 minutes in an air-oven. The resulting coating film was subjected to normal cross-cut adhesion test.
(2) double fluid type urethane coating
   An injection-molded specimen of 120 mm x 130 mm x 3 mm^{t}, was coated with primer (trade name: Unistool P801, produced by Mitsui Petrochemical Industries, Ltd., thickness: 10 µm) by means of air-spray. Thereafter, on the primer, was coated double fluid type urethane coating material (trade name: R271, produced by Japan Bi-chemical, Co., thickness: 60 µm), and the specimen was still stood for 10 minutes at room temperature. Subsequently, the coated material was cured at 80°C for 30 minutes in an air-oven. The resulting coating film was subjected to normal cross-cut adhesion test and peeling test.

### Sample Preparation Example 1

### [Cycloolefin copolymer (a-1)]

Copolymerization reaction of ethylene with tetracyclo[4.4.0.1^{2,5}.1^{7,10}]dodecene-3 (hereinafter sometimes abbreviated to "TCD-3") was carried out continuously using a 1-liter reactor equipped with a stirring blade. That is, there were continuously fed to the reactor through the upper portion thereof a cyclohexane solution of TCD-3 at a rate of 0.4 l/hr so that the concentration in the reactor of TCD-3 becomes 60 g/l, a cyclohexane solution of VO(OC₂H₅)Cl₂ as a catalyst at a rate of 0.5 l/hr so that the vanadium concentration in the reactor becomes 0.5 mmol/l (in this case, the concentration of vanadium to be fed is 2.86 times the vanadium concentration in the reactor), a cyclohexane solution of ethylaluminum sesquichloride Al(C₂H₅)_{1.5}Cl_{1.5} at a rate of 0.4 l/hr so that the aluminum concentration in the reactor becomes 4.0 mmol/l, and cyclohexane at a rate of 0.7 l/hr. On the one hand, the polymer solution was withdrawn continuously from the reactor through the lower portion thereof so that the polymer solution in the reactor always amounts to 1 liter (that is, the retention time becomes 0.5 hour).

To the polymerization system were fed ethylene at a rate of 20 l/hr, nitrogen at a rate of 10 l/hr and hydrogen at a rate of 0.5 l/hr using a bubbling tube.

The copolymerization reaction was carried out at a temperature kept at 10°C by means of circulation of a cooling medium in a jacket surrounding the reactor.

The copolymerization reaction carried out under the polymerization conditions mentioned above resulted in the preparation of an ethylene/TCD-3 random copolymer.

That is, the polymerization reaction was stopped by adding a cyclohexane/isopropyl alcohol mixture (1/1 volume ratio) to the polymer solution withdrawn from the reactor through the lower portion thereof. Thereafter, 1 liter of an aqueous solution containing 5 ml of concentrated hydrochloric acid and the polymer solution withdrawn are brought into contact with each other in the proportion of 1:1, while strongly stirring them by means of a homomixer, whereby the residual catalyst was allowed to migrate to an aqueous phase.

The mixture thus resulted was allowed to stand, the aqueous phase was removed therefrom, the polymer solution was purified by washing twice with distilled water and then isolated.

The polymer solution thus isolated was brought into contact with acetone amounting to three times as much as the polymer solution while stirring them strongly, and the solids thereby precipitated were collected by filtration, followed by thorough washing with acetone. The solids thus collected were then dried for 24 hours in a stream of nitrogen at 130°C and 350 mmHg.

By carrying out continuously a series of operations mentioned above, an ethylene/TCD-3 random copolymer was prepared at a rate of 76 g/hr (36 g/l).

From the results obtained in ¹³C-NMR analysis of this copolymer, it was found that the ethylene content in the copolymer is 63 mol%. Furthermore this copolymer had an intrinsic viscosity [η], as measured in decalin at 135°C, of 0.5 dl/g, an iodine value of 1.0 and TMA of 150°C.

Hereinafter, this cycloolefin random copolymer (a-1) is referred to as "PO-1".

### Sample Preparation Example 2

### [Graft modified cycloolefin copolymer (a)]

A mixture of 100 parts by weight of "PO-1" obtained in Sample Preparation Example 1, 1 part by weight of maleic anhydride and 0.2 part by weight of 2,5-dimethyl-2,5-di(t-butylperoxy) hexine-3 (trade name Perhexine 25B, a product of Nippon Oils And Fats Co., Ltd.) was melt kneaded at 260^{o}C using a double-screw extruder equipped with a vent of 30 mm in diameter to obtain a graft modified cycloolefin copolymer (b).

The content of grafted maleic anhydride unit in the graft modified cycloolefin copolymer obtained was 0.83% by weight.

Hereinafter, this graft modified cycloolefin copolymer (b) is referred to as "GPO-1".

### Sample Preparation Example 3

### [Graft modified elastomer (c)]

A mixture of 100 parts by weight of an ethylene/propylene copolymer having the ethylene content of 80 mol% and an intrinsic viscosity [η], as measured in decalin at 130°C, of 2.2 dl/g (this copolymer is referred to as "MP-0"), 1 part by weight of maleic anhydride and 0.2 part by weight of 2, 5-dimethyl-2,5-di(t-butylperoxy)hexine-3 was melt kneaded at 260°C using a double-screw extruder equipped with a vent of 30 mm in diameter to obtain a graft modified elastomer (c).

The content of the grafted maleic anhydride unit in the graft modified elastomer obtained was 0.90% by weight. The tensile modulus of the graft modified elastomer was 80 kg/cm².

Hereinafter, this graft modified elastomer is referred to as "MP-1".

### Example 1 (not in accordance with the invention)

Using a double-screw extruder having a vent of 30 mm in diameter, 25 parts by weight of the graft modified cycloolefin copolymer obtained in the Sample Preparation Example 2 and 5 parts by weight of the graft modified elastomer obtained in the Sample Preparation Example 3 were melt-kneaded at 230°C to prepare a mixture precursor.

Subsequently, by using the same extruder, 70 parts by weight of a polyamide resin (nylon-6, a product of Toray Ind. Inc. under a trade name of Amiran CM 1007) and 30 parts by weight of the above-mentioned mixture precursor were kneaded at 250°C to obtain a cycloolefin resin composition.

The cycloolefin resin composition dried for 8 hours at 100°C was molded into a test specimen and a square plate for examination of physical properties and adhesion of coating by using an injection molding machine (30 EPN of Toshiba IS) at a molding temperature of 250°C and a mold temperature of 60°C.

Physical properties of the test specimens as measured are shown in Table 1.

As is clear from the results shown in Table 1, the specimen prepared from this cycloolefin resin composition was excellent in impact strength and adhesion strength, and also low in increment after immersion into water.

### Example 2 (not in accordance with the invention)

Example 1 was repeated except that the proportions of the graft modified cycloolefin copolymer, graft modified elastomer and nylon-6 used were changed to 10 parts by weight, 5 parts by weight and 85 parts by weight respectively, whereby a cycloolefin resin composition was prepared, and test specimens were prepared therefrom.

Physical properties of the specimens obtained are shown in Table 1.

As is clear from the results shown in Table 1, the specimens obtained from this cycloolefin resin composition were excellent in adhesion of coating.

### Example 3

Example 1 was repeated except that there were compounded 10 parts by weight of the graft modified cycloolefin copolymer, 2 parts by weight of the ethylene/propylene copolymer (unmodified elastomer, "MP-O") in the sample preparation Example 3, 3 parts by weight of the graft modified elastomer and 85 parts by weight of nylon-6, whereby a cycloolefin resin composition was prepared, and test specimens were prepared therefrom.

Physical properties of the specimens obtained are shown in Table 1.

### Comparative Example 1

Example 1 was repeated except that the proportions of the graft modified cycloolefin copolymer, graft modified elastomer and nylon-6 used were changed to 45 parts by weight, 5 parts by weight and 50 parts by weight respectively, whereby a cycloolefin resin composition was prepared, and test specimens were prepared therefrom.

Physical properties of the specimens obtained are shown in Table 1.

As is clear from the results shown in Table 1, the specimens obtained from this cycloolefin resin composition were inferior in adhesion of coating as compared with Example 1.

### Comparative Example 2

Nylon-6 alone dried for 8 hours at 100°C was molded into a test specimen and a square plate for examination of physical properties and adhesion of coating by using the injection molding machine (30 EPN of Toshiba IS) at a molding temperature of 250^{o}C and a mold temperature of 60^{o}C.

Physical properties of the test specimens as measured are shown in Table 1.

As is clear from the results shown in Table 1, the specimens obtained from polyamide resin alone were inferior in adhesion of coating as compared with Examples 1 and 2.

**Table 1**

| | Ex. 1* | Ex. 2* | Ex. 3 | Comp. Ex.1 | Comp. Ex.2 |
|---|---|---|---|---|---|
| Graft modified cyclo-olefin copolymer (a) | GPO-1 | GPO-1 | GPO-1 | GPO-1 | - |
| Elastomer (b) | - | - | MP-0 | - | - |
| Graft modified Elastomer (c) | MP-1 | MP-1 | MP-1 | MP-1 | - |
| Polyamide (d) | CM1007 | CM1007 | CM1007 | CM1007 | CM1007 |
| Resin composition (a)/(b)/(c)/(d) | 25/0/ 5/70 | 10/0/ 5/85 | 10/2/ 3/85 | 45/0/ 5/50 | 0/0/ 0/100 |
| I Z (kg·cm/cm) | 25 | 25 | 22 | 20 | 5 |
| Water absorption (%) | 0.8 | 1.0 | 1.0 | 0.6 | 1.8 |
| Adhesion of Coating Cross-cut test (acryl-urethane coating material) | no peeled | no peeled | no peeled | peeled | peeled |
| Cross-cut test (urethane coating material) | no peeled | no peeled | no peeled | no peeled | no peeled |
| Peeling strength (g/cm) | 850 | 920 | 900 | 700 | 620 |

| | | | | | |
|---|---|---|---|---|---|
| * not in accordance with the present invention | | | | | |

## Claims

1. A cycloolefin resin composition consisting of:
(a) a graft modified cycloolefin resin obtainable by modifying at least one of the following resins a-1, a-2, a-3 with a graft monomer;
whereby
(a-1) is a random copolymer of ethylene and a cycloolefin represented by the following formula (I),
(a-2) is a ring opening homopolymer or copolymer of a cycloolefin represented by the following formula (I), and
(a-3) is a hydrogenated product of the above-mentioned ring opening homopolymer or copolymer,
(b) an α-olefin copolymer elastomer which is not modified with any graft monomers, and having a tensile modulus at 23°C of 0.1 to 2000 kg/cm², a glass transition temperature of 0°C or less, and a crystallinity index of 30% or less;
(c) a graft modified α-olefin copolymer other than the component (a) obtainable by graft modifying an α-olefin copolymer having a tensile modulus at 23°C of 0.1 to 2000 kg/cm², a glass transition temperature of 0°C or less, and a crystallinity index of 30% or less, with a graft monomer;
(d) a polyamide; and
(e) optionally, at least one additive selected from inorganic fillers, organic fillers, heat stabilizers, weathering agents, antistatic agents, antislip agents, anti-blocking agents, anti-fogging agents, lubricants, pigments, dyes, natural oil, synthetic oil and wax;
wherein based on 100 parts by weight of the sum total of the components (a), (b), (c) and (d), the amount of the component (a) is from 0.5 to 38 parts by weight, the total sum content of the components (b) and (c) is 0.5 to 38 parts by weight, and the amount of the component (d) is from more than 60 parts by weight to less than 99 parts by weight; 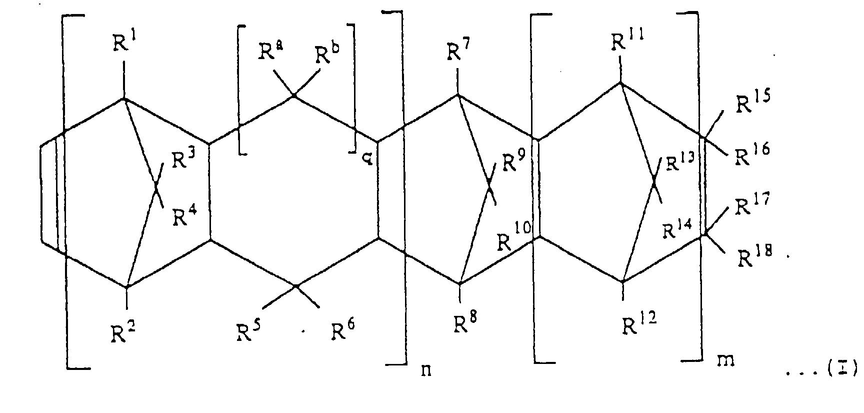 wherein
n is 0 or 1,
m is 0 or a positive integer,
q is 0 or 1,
R¹ to R¹⁸, R^{a} and R^{b}, independently, represent an atom or a group selected from a hydrogen atom, a halogen atom and a hydrocarbon group, or R¹⁵ to R¹⁸ are bonded together to form a monocyclic group or a polycyclic group which can have double bond(s), or R¹⁵ and R¹⁶ or R¹⁷ and R¹⁸ form an alkylidene group.

2. A cycloolefin resin composition according to Claim 1, wherein the graft modified cycloolefin resin (a) has a softening temperature of at least 70°C and an intrinsic viscosity (η), as measured in decalin at 130°C, of 0.05-10 dl/g.

3. A cycloolefin resin composition according to Claim 1 wherein the graft modified α-olefin copolymer (c) has a graft ratio of from 0.01-10% by weight.

4. A cycloolefin resin composition according to Claim 1 wherein the polyamide (d) has an intrinsic viscosity (η) of from 0.2 to 3.5 dl/g, as measured in 96% sulfuric acid at 25°C.

5. A cycloolefin resin composition according to Claim 1 wherein the elastomer (b) has a density of from 0.82 to 0.96 g/cm³.

6. A cycloolefin resin composition according to Claim 5 wherein the elastomer (b) is an ethylene/α-olefin copolymer rubber having 3 to 20 carbon atoms, a propylene/α-olefin copolymer rubber having 4 to 20 carbon atoms, or a combination thereof.

7. A cycloolefin resin composition according to Claim 5 wherein the elastomer (b) is selected from a copolymer of ethylene and propylene, a copolymer of ethylene and 1-butene, and a copolymer of propylene and 1-butene.

8. A cycloolefin resin composition according to Claim 1 wherein the total sum content of the elastomer (b) and the graft modified α-olefin (c) is from 3 to 20 parts by weight.

9. A cycloolefin resin composition according to Claim 8 wherein the total sum content of the elastomer (b) and the graft modified α-olefin copolymer (c) is from 4 to 10 parts by weight.

10. A cycloolefin resin composition according to Claim 1 wherein the graft modified cycloolefin resin (a) is a graft modified random copolymer of ethylene and cycloolefin having the formula (I).

11. A cycloolefin resin composition according to Claim 1 wherein the graft modified cycloolefin resin (a) is a graft modified ring opening homopolymer or copolymer of the cycloolefin of formula (I).

12. A cycloolefin resin composition according to Claim 1 wherein the graft modified cycloolefin resin (a) is a graft modified hydrogenated product of the ring opening homopolymer or copolymer of the cycloolefin of formula (I).

13. A cycloolefin resin composition according to Claim 1 containing from 65 to 90 parts by weight of the polyamide (d)

14. A cycloolefin resin composition according to Claim 13 containing from 65 to 85 parts by weight of the polyamide (d).

15. A cycloolefin resin composition according to Claim 1 containing from 1 to 15 parts by weight of the graft modified α-olefin copolymer (c).

16. A cycloolefin resin composition according to Claim 1 containing from 1 to 15 parts by weight of the non-graft modified elastomer (b) and from 1 to 15 parts by weight of the graft modified α-olefin copolymer (c).

17. Use of a cycloolefin resin as defined in any preceding Claim in the manufacture of molded articles.

## Patentansprüche

1. Cycloolefinharz-Zusammensetzung, bestehend aus:
(a) einem pfropfmodifizierten Cycloolefinharz erhältlich durch Modifikation mindestens eines der folgenden Harze a-1, a-2, a-3, mit einem Pfropfpolymer, wobei
(a-1) ein statistisches Copolymer von Ethylen und einem Cycloolefin ist, dargestellt durch die folgende Formel (I),
(a-2) ein ringöffnendes Homopolymer oder Copolymer eines Cycloolefins ist, dargestellt durch die Formel (I), und
(a-3) ein hydriertes Produkt des oben erwähnten ringöffnenden Homopolymeren oder Copolymeren ist;
(b) einem α-Olefincopolymer-Elastomer, das nicht mit einem Pfropfmonomer modifiziert ist, welches einen Zugmodul von 0,1 bis 2.000 kg/cm² bei 23°C, eine Glasübergangstemperatur von 0°C oder weniger, und einen Kristallinitätsindex von 30% oder weniger aufweist;
(c) einem pfropfmodifizierten α-Olefincopolymer, das anders ist als die Komponente (a), erhältlich durch Pfropfmodifizieren eines α-Olefincopolymeren, welches einen Zugmodul von 0,1 bis 2.000 kg/cm² bei 23°C, eine Glasübergangstemperatur von 0°C oder weniger, und einem Kristallinitätsindex von 30% oder weniger aufweist, mit einem Pfropfmonomer;
(d) einem Polyamid; und
(e) gegebenenfalls aus mindestens einem Zusatzmittel, ausgewählt aus anorganischen Füllstoffen, organischen Füllstoffen, Wärmestabilisatoren, Bewitterungsmitteln, antistatischen Mitteln, rutschhemmenden Mitteln, Antiblockiermitteln, Klarsichtmitteln, Gleitmitteln, Pigmenten, Farbstoffen, natürlichen Ölen, synthetischen Ölen und Wachs;
worin bezogen auf 100 Gewichtsteile der Gesamtsumme der Komponenten (a), (b), (c) und (d) die Menge der Komponente (a) von 0,5 bis 38 Gewichtsteile, die Gesamtsumme des Gehalts an den Komponenten (b) und (c) von 0,5 bis 38 Gewichtsteile und die Menge der Komponente (d) von mehr als 60 bis weniger als 99 Gewichtsteile baträgt: 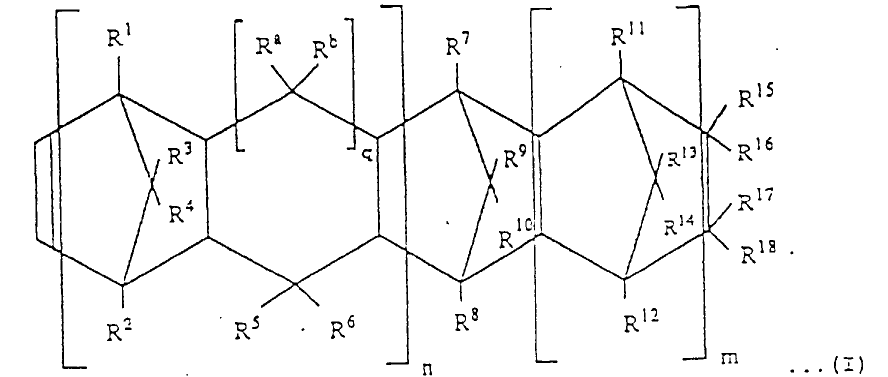 worin
n 0 oder 1 ist,
m 0 oder eine positive ganze Zahl ist,
q 0 oder 1 ist,
R¹ bis R¹⁶, R^{a} und R^{b}, unabhängig voneinander ein Atom oder eine Gruppe darstellen, ausgewählt aus einem Wasserstoffatom, einem Halogenatom und einer Kohlenwasserstoffgruppe, oder R¹⁵ bis R¹⁸ zusammen eine monocyclische oder eine polycyclische Gruppe bilden, die eine oder mehrere Doppelbindungen aufweisen kann, oder R¹⁵ und R¹⁶ oder R¹⁷ und R¹⁸ eine Alkylidengruppe bilden.

2. Cycloolefinharz-Zusammensetzung gemäß Anspruch 1, worin das pfropfmodifizierte Cycloolefinharz (a) eine Erweichungstemperatur von mindestens 70°C und einen Staudinger-Index (η), gemessen in Decalin bei 130°C, von 0,05-10 dl/g aufweist.

3. Cycloolefinharz-Zusammensetzung gemäß Anspruch 1, worin das pfropfmodifizierte α-Olefincopolymer (c) einen Pfropfanteil von 0,1 bis 10 Gew.% aufweist.

4. Cycloolefinharz-Zusammensetzung gemäß Anspruch 1, worin das Polyamid (d) einen Staudinger-Index (η) von 0,2 bis 3,5 dl/g, gemessen in 96%iger Schwefelsäure bei 25°C, aufweist.

5. Cycloolefinharz-Zusammensetzung gemäß Anspruch 1, worin das Elastomer (b) eine Dichte von 0,82 bis 0,96 g/cm³ aufweist.

6. Cycloolefinharz-Zusammensetzung gemäß Anspruch 5, worin das Elastomer (b) ein Ethylen/α-Olefin-Copolymergummi mit 3 bis 20 Kohlenstoffatomen, ein Propylen/α-Olefin-Copolymergummi mit 4 bis 20 Kohlenstoffatomen oder eine Kombination hiervon ist.

7. Cycloolefinharz-Zusammensetzung gemäß Anspruch 5, worin das Elastomer (b) aus einem Copolymer von Ethylen und Propylen, einem Copolymer von Ethylen und 1-Buten und einem Copolymer von Propylen und 1-Buten ausgewählt ist.

8. Cycloolefinharz-Zusammensetzung gemäß Anspruch 1, worin die Gesamtsumme des Gehalts an dem Elastomer (b) und dem pfropfmodifizierten α-Olefin (c) 3 bis 20 Gewichtsteile beträgt.

9. Cycloolefinharz-Zusammensetzung gemäß Anspruch 8, worin die Gesamtsumme des Gehalts an dem Elastomer (b) und dem pfropfmodifizierten α-Olefin-Copolymer (c) 4 bis 10 Gewichtsteile beträgt.

10. Cycloolefinharz-Zusammensetzung gemäß Anspruch 1, worin das pfropfmodifizierte Cycloolefinharz (a) ein pfropfmodifiziertes statistisches Copolymer von Ethylen und einem Cycloolefin der Formel (I) ist.

11. Cycloolefinharz-Zusammensetzung gemäß Anspruch 1, worin das pfropfmodifizierte Cycloolefinharz (a) ein ringöffnendes Homopolymer oder Copolymer des Cycloolefins der Formel (I) ist.

12. Cycloolefinharz-Zusammensetzung gemäß Anspruch 1, worin das pfropfmodifizierte Cycloolefinharz (a) ein pfropfmodifiziertes hydriertes Produkt des ringöffnenden Homopolymeren oder Copolymeren des Cycloolefins der Formel (I) ist.

13. Cycloolefinharz-Zusammensetzung gemäß Anspruch 1, welche von 65 bis 90 Gewichtsteile des Polyamids (d) enthält.

14. Cycloolefinharz-Zusammensetzung gemäß Anspruch 13, welche von 65 bis 85 Gewichtsteile des Polyamids (d) enthält.

15. Cycloolefinharz-Zusammensetzung gemäß Anspruch 1, welche von 1 bis 15 Gewichtsteile des pfropfmodifizierten α-Olefin-Copolymeren (c) enthält.

16. Cycloolefinharz-Zusammensetzung gemäß Anspruch 1, welche von 1 bis 15 Gewichtsteile des nicht pfropfmodifizierten Elastomeren (b) und von 1 bis 15 Gewichtsteile des pfropfmodifizierten α-Olefin-Copolymeren (c) enthält.

17. Verwendung des Cycloolefinharzes, wie es in jedem der vorhergehenden Ansprüche definieret ist, zur Herstellung von Formkörpern.

## Revendications

1. Composition de résine de cyclooléfine constituée par :
(a) une résine de cyclooléfine modifiée par greffage pouvant être obtenue par modification d'au moins une des résines a-1, a-2, a-3 suivantes avec un monomère de greffage :
sachant que (a-1) est un copolymère statistique d'éthylène et d'une cyclooléfine représenté par la formule (I) suivante,
(a-2) est un homopolymère ou copolymère obtenu par ouverture de cycle d'une cyclooléfine représentée par la formule (I) suivante, et
(a-3) est un produit hydrogéné de l'homopolymère ou copolymère obtenu par ouverture de cycle mentionné précédemment,
(b) un élastomère copolymère d'α-oléfine qui n'est modifié par aucun monomère de greffage et qui présente un module de traction à 23°C de 0,1 à 2000 kg/cm² (9,81 kPa à 196,2 MPa), une température de transition vitreuse de 0°C ou moins, et un indice de cristallinité de 30 % ou moins;
(c) un copolymère d'α-oléfine modifié par greffage autre que le composant (a) pouvant être obtenu par modification par greffage d'un copolymère d'α-oléfine présentant un module de traction à 23°C de 0,1 à 2000 kg/cm² (9,81 kPa à 196,2 MPa), une température de transition vitreuse de 0°C ou moins, et un indice de cristallinité de 30 % ou moins, avec un monomère de greffage;
(d) un polyamide; et
(e) facultativement au moins un additif choisi parmi des charges inorganiques, des charges organiques, des stabilisants thermiques, des agents améliorant la résistance aux intempéries, des agents antistatiques, des agents antidérapants, des agents antiblocage, des agents antibuée, des lubrifiants, des pigments, des colorants, une huile naturelle, une huile synthétique et une cire;
dans laquelle pour 100 parties en poids de la somme totale des composants (a), (b), (c) et (d), la quantité du composant (a) est de 0,5 à 38 parties en poids, la somme totale des composants (b) et (c) est de 0,5 à 38 parties en poids, et la quantité du composant (d) va de plus de 60 parties en poids à moins de 99 parties en poids; 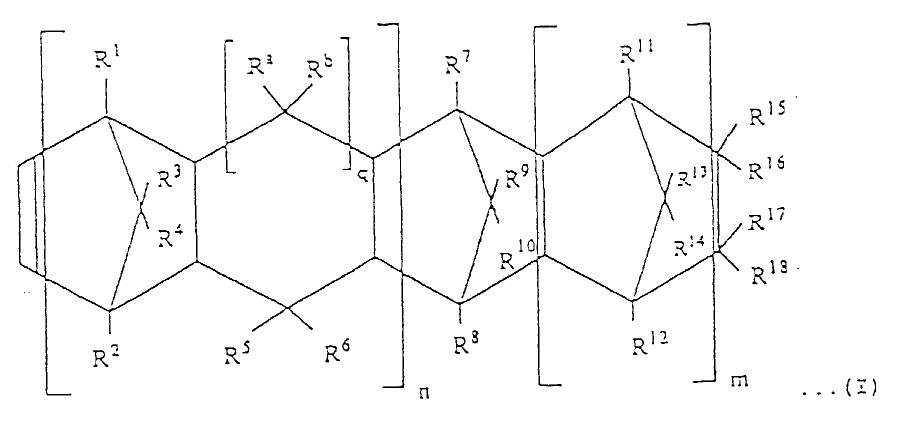 dans laquelle
n est égal à 0 ou à 1,
m est égal à 0 ou à un nombre entier positif,
q est égal à 0 ou à 1,
R¹ à R¹⁸, R^{a} et R^{b} représentent indépendamment un atome ou un groupe choisi parmi un atome d'hydrogène, un atome d'halogène et un groupe hydrocarboné, ou R¹⁵ à R¹⁸ sont liés entre eux pour former un groupe monocyclique ou un groupe polycyclique qui peut comporter une ou plusieurs doubles liaisons ou R¹⁵ et R¹⁶ ou R¹⁷ et R¹⁸ forment un groupe alkylidène.

2. Composition de résine de cyclooléfine selon la revendication 1, dans laquelle la résine de cyclooléfine modifiée par greffage (a) présente une température de ramollissement d'au moins 70°C et une viscosité intrinsèque (η), telle que mesurée dans le décahydronaphtalène à 130°C, de 0,05 à 10 dl/g.

3. Composition de résine de cyclooléfine selon la revendication 1, dans laquelle le copolymère d'α-oléfine modifié par greffage (c) présente un rapport de greffage de 0,01 à 10 % en poids.

4. Composition de résine de cyclooléfine selon la revendication 1, dans laquelle le polyamide (d) présente une viscosité intrinsèque (η) de 0,2 à 3,5 dl/g, telle que mesurée dans de l'acide sulfurique à 96 % à 25°C.

5. Composition de résine de cyclooléfine selon la revendication 1, dans laquelle l'élastomère (b) présente une masse volumique de 0,82 à 0,96 g/cm³.

6. Composition de résine de cyclooléfine selon la revendication 5, dans laquelle l'élastomère (b) est un caoutchouc copolymère éthylène/α-oléfine comportant 3 à 20 atomes de carbone, un copolymère propylène/α-oléfine comportant 4 à 20 atomes de carbone, ou une combinaison de ceux-ci.

7. Composition de résine de cyclooléfine selon la revendication 5, dans laquelle l'élastomère (b) est choisi parmi un copolymère d'éthylène et de propylène, un copolymère d'éthylène et de 1-butène et un copolymère de propylène et de 1-butène.

8. Composition de résine de cyclooléfine selon la revendication 1, dans laquelle la somme totale de l'élastomère (b) et du dérivé d'α-oléfine modifié par greffage (c) est de 3 à 20 parties en poids.

9. Composition de résine de cyclooléfine selon la revendication 8, dans laquelle la somme totale de l'élastomères (b) et du copolymère d'α-oléfine modifié par greffage (c) est de 4 à 10 parties en poids.

10. Composition de résine de cyclooléfine selon la revendication 1, dans laquelle la résine de cyclooléfine modifiée par greffage (a) est un copolymère statistique modifié par greffage d'éthylène et de cyclooléfine répondant à la formule (I).

11. Composition de résine de cyclooléfine selon la revendication 1, dans laquelle la résine de cyclooléfine modifiée par greffage (a) est un homopolymère ou copolymère obtenu par ouverture de cycle, modifié par greffage, de la cyclooléfine de formule (I).

12. Composition de résine de cyclooléfine selon la revendication 1, dans laquelle la résine de cyclooléfine modifiée par greffage (a) est un produit hydrogéné modifié par greffage de l'homopolymère ou du copolymère obtenu par ouverture de cycle de la cyclooléfine de formule (I).

13. Composition de résine de cyclooléfine selon la revendication 1 contenant de 65 à 90 parties en poids du polyamide (d).

14. Composition de résine de cyclooléfine selon la revendication 13 contenant de 65 à 85 parties en poids du polyamide (d).

15. Composition de résine de cyclooléfine selon la revendication 1 contenant de 1 à 15 parties en poids du copolymère d'α-oléfine modifié par greffage (c).

16. Composition de résine de cyclooléfine selon la revendication 1, contenant de 1 à 15 parties en poids de l'élastomère non-modifié par greffage (b) et de 1 à 15 parties en poids du copolymère d'α-oléfine modifié par greffage (c) .

17. Utilisation d'une résine de cyclooléfine selon l'une quelconque des revendications précédentes dans la fabrication d'articles moulés.
